Europäisches Patentamt

European Patent Office

Office européen des brevets

(11) Veröffentlichungsnummer: **0 341 395 B1**

(12) **EUROPÄISCHE PATENTSCHRIFT**

(45) Veröffentlichungstag der Patentschrift: **30.12.92**

(21) Anmeldenummer: **89104454.7**

(22) Anmeldetag: **14.03.89**

(51) Int. Cl.⁵: **B26B 19/28**

54 **Vorrichtung für ein elektrisches Gerät.**

(30) Priorität: **23.07.88 DE 3825120**
**11.05.88 DE 3816070**

(43) Veröffentlichungstag der Anmeldung:
**15.11.89 Patentblatt 89/46**

(45) Bekanntmachung des Hinweises auf die
Patenterteilung:
**30.12.92 Patentblatt 92/53**

(84) Benannte Vertragsstaaten:
**AT BE CH DE ES FR GB GR IT LI LU NL SE**

56 Entgegenhaltungen:
**DE-A- 1 513 489        DE-A- 1 533 799**
**DE-A- 2 211 262        DE-B- 1 563 677**
**FR-A- 1 380 856        US-A- 3 536 981**
**US-A- 3 539 898        US-A- 3 659 180**
**US-A- 3 710 224        US-A- 3 842 295**

(73) Patentinhaber: **Wella Aktiengesellschaft**
**Berliner Allee 65**
**W-6100 Darmstadt(DE)**

(72) Erfinder: **Mattinger, Detlef**
**Am Mühlgraben 5**
**W-6101 Bickenbach(DE)**
Erfinder: **Trinkaus, Karl**
**Hoffmannstrasse 38**
**W-6100 Darmstadt(DE)**

EP 0 341 395 B1

**Beschreibung**

Die Erfindung betrifft eine Vorrichtung für ein elektrisches, Akkumulatoren aufweisendes Gerät, vorzugsweise eine Haarschneidemaschine, für wahlweisen Netz- oder Akkumulatorbetrieb, gemäß den Merkmalen im Oberbegriff der unabhängigen Ansprüche 1 - 5. Eine derartige Vorrichtung ist aus der US-A-3 710 224 bekannt.

Um eine freie Beweglichkeit zu ermöglichen, werden beim Friseur vorwiegend Haarschneidemaschinen mit einem eingebauten Akkumulator verwendet, die bei Nichtgebrauch in einem Gerätehalter abgestellt werden, der gleichzeitig als Ladeeinrichtung dient. Dazu sind in dem Gerätehalter - auch Ladeständer genannt - federnde Kontakte vorgesehen, auf die die Haarschneidemaschine durch ihr Eigengewicht drückt. Aus einem Stromversorgungsgerät, das in einem Netzstecker integriert ist, wird den federnden Kontakten Strom zugeführt, so daß der Akkumulator nachgeladen wird.

Aus ergonomischen Gründen sollten Haarschneidemaschinen möglichst leicht und klein sein, was sich allerdings negativ auf die Betriebszeit mit einer Akkumulatorladung auswirkt. Dabei ist besonders wichtig, daß bei Nachlassen der Energie des Akkumulators während eines Haarschnittes der Friseur sofort eine Möglichkeit hat, das Gerät weiter in Betrieb zu halten.

Aufgabe der Erfindung ist es, eine Möglichkeit der Fortsetzung des Betriebes bei fehlender Energie des Akkumulators zu schaffen, wobei keine umständlichen und zeitraubenden Manipulationen durchzuführen sind.

Insbesondere sollen die Manipulationen so durch zu führen sein, daß dazu lediglich die Hand erforderlich ist, die auch das Gerät hält bzw. ablegt. Diese Aufgabe wird gemäß den Merkmalen der unabhängigen Ansprüche 1 - 5 gelöst.

Die erfindungsgemäße Vorrichtung weist den Vorteil auf, daß bei nachlassender Energie des Akkumulators die Haarschneidemaschine lediglich auf den Adapter aufzusetzen ist und je nach Ausführungsform mit einer einfachen Bewegung der Adapter mit der Haarschneidemaschine verriegelt wird. Die Bewegung erfolgt vorzugsweise derart, daß die gesamte Einheit (Haarschneidemaschine, Adapter, Ladeständer) sich nicht auf der Standfläche (Tisch) verschiebt. Besonders günstig ist hierbei eine senkrechte Bewegung.

Dadurch kann die Haarschneidemaschine direkt von der Stromquelle versorgt werden. Gleichzeitig wird der Akkumulator aufgeladen. Dabei kann die Stromquelle von einem, vorzugsweise in einem Netzstecker integrierten, Stromversorgungsgerät gebildet sein. Letzteres kann jedoch auch in der Haarschneidemaschine vorgesehen sein, so daß der Adapter lediglich das Netzkabel adaptiert. Im Rahmen der Erfindung können zur elektrischen Verbindung zwischen der Haarschneidemaschine und dem Adapter Kontaktfedern dienen. Eine induktive Energieübertragung ist ebenfalls möglich.

Ein weiterer Vorteil ergibt sich dadurch, daß ein Akkumulator kleinerer Kapazität eingesetzt werden kann, da im Kapazitätsendeausnahmefall durch einfache Maßnahme ein Netzbetrieb möglich ist. Dadurch kann ein billigerer Akkumulator als üblich eingesetzt werden und verringert das Gerätgesamtgewicht (bessere Handhabung).

Die Erfindung ist nicht nur für Haarschneidemaschinen geeignet, sondern kann in vorteilhafter Weise auch zusammen mit anderen elektrischen Geräten angewendet werden, die bei entladenem Akkumulator mit Netzspannung betrieben werden - beispielsweise Rasierapparate und Staubsauger.

Die erfindungsgemäße Vorrichtung gemäß Anspruch 1, einen magnetischen kreis umfassend, kann dadurch weiter gebildet werden, daß federnde Kontakte zur elektrischen Verbindung des Adapters mit dem Gerät vorgesehen sind.

Bei einer Ausführungsvariante gemäß Anspruch 1 ist lediglich ein Schalter an dem Gerät zu betätigen, um im Falle des Netzbetriebes den Adapter mit dem Gerät zu verriegeln oder im Falle des Akkumulatorbetriebes den Adapter auf dem Ladeständer liegen zu lassen. Dementsprechend sieht eine Ausgestaltung dieser Weiterbildung vor, daß der magnetische Kreis mit einer Spule versehen ist, welche über einen in dem Gerät angeordneten Schalter mit Strom beaufschlagbar ist. Es sind jedoch auch permanentmagnetische Kreise möglich, die entweder durch einen Stromstoß oder durch eine entsprechende Bewegung eines der Elemente des Kreises aufgetrennt werden können.

Gemäß einer anderen Weiterbildung der Erfindung ist der Ladeständer mit einer Vertiefung zur Aufnahme des Adapters und des Geräts vorgesehen. Bei einer elektro-magnetischen Verbindung des Adapters und des Geräts kann ferner eine Schaltung vorgesehen sein, welche bei einem geringen Ladezustand des Akkumulators die Verbindung zwischen dem Gerät und dem Adapter schließt.

Die Ausführungsform gemäß dem unabhängigen Anspruch 2 sowie vorteilhafte Ausgestaltungen dieser Ausführungsform ermöglichen, daß das Gerät in einfachster Weise auf den Ladeständer abgesetzt werden kann, wobei lediglich zum Ver- bzw. Entriegeln des Adapters jeweils ein Druck auf das Gerät erforderlich ist. Zu dieser Manipulation ist lediglich die Hand erforderlich, welche auch das Gerät hält bzw. ablegt. Dadurch, daß nur ein Druck auf das Gerät erfolgt, ist es auch nicht erforderlich, den Gerätehalter etwa mit der anderen Hand festzuhalten.

Die gleiche vorteilhafte Wirkung kann mit den Ausführungsformen gemäß den Merkmalen der unabhängigen Ansprüche 3 - 5 erzielt werden.

Durch die in den abhängigen Ansprüchen aufgeführten Maßnahmen sind weitere vorteilhafte Weiterbildungen und Verbesserungen der in den unabhängigen Ansprüchen 1 - 5 angegebenen Ausführungsformen der Erfindung möglich.

Ausführungsbeispiele der Erfindung sind in der Zeichnung anhand mehrerer Figuren dargestellt und in der nachfolgenden Beschreibung näher erläutert. Es zeigt:

Fig. 1

ein erstes Ausführungsbeispiel,

Fig. 2

ein elektrisches Schaltbild für das erste Ausführungsbeispiel,

Fig. 3

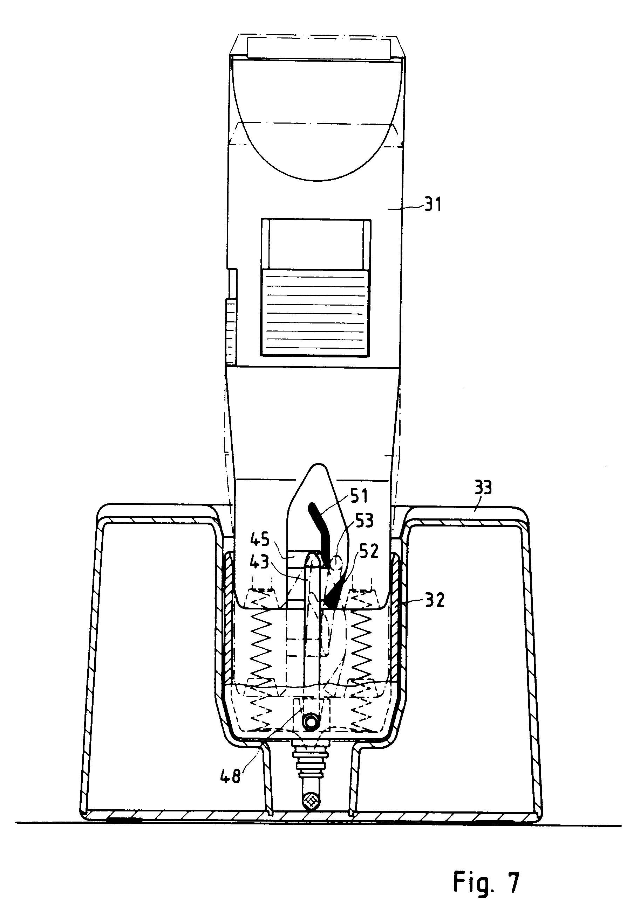

bis Fig. 7 ein zweites Ausführungsbeispiel in verschiedenen Bewegungsphasen und in verschiedenen Ansichten,

Fig. 8 bis Fig. 11

ein drittes Ausführungsbeispiel ebenfalls in verschiedenen Bewegungsphasen und Ansichten,

Fig. 12 bis Fig. 14

ein viertes Ausführungsbeispiel,

Fig. 15 bis Fig. 19

ein fünftes Ausführungsbeispiel,

Fig. 20

ein elektrisches Schaltbild,

Fig. 21 bis 30

ein sechstes Ausführungsbeispiel und

Fig. 31 bis 34

ein siebtes Ausführungsbeispiel.

Gleiche Teile sind in den Figuren mit gleichen Bezugszeichen versehen.

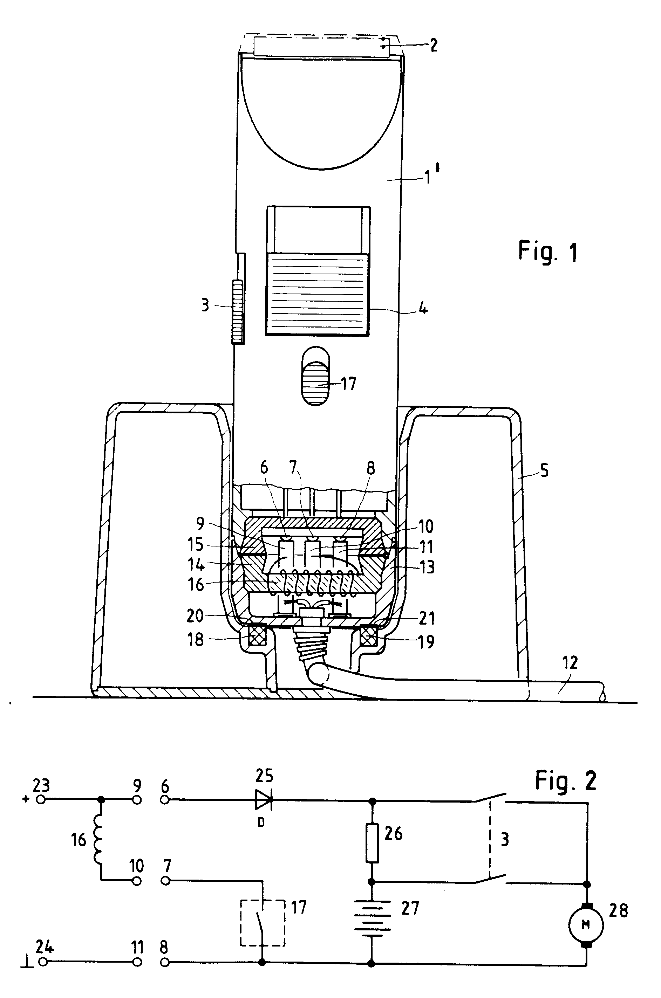

Bei dem Ausführungsbeispiel nach Fig. 1 ist eine Haarschneidemaschine 1' in an sich bekannter Weise mit einem Schneidkopf 2, einem Ein/Aus-Schalter 3 und einer Einrichtung 4 zur Einstellung der Schnittlänge versehen. Im Innern der Haarschneidemaschine 1' befindet sich ein nicht dargestellter Motor und ein Akkumulator zur Speicherung der zum Betrieb des Motors notwendigen elektrischen Energie.

Die Haarschneidemaschine 1' kann bei Nichtgebrauch in einen Ladeständer 5 eingesteckt werden, wobei Kontakte 6, 7, 8 mit Kontaktfedern 9, 10, 11 in Berührung kommen, so daß der Akkumulator über ein Kabel 12 von einem Stromversorgungsgerät, das in Fig. 1 nicht dargestellt ist, geladen werden kann.

Um bei entladenem Akkumulator einen Netzbetrieb zu ermöglichen, sind die Kontaktfedern 9, 10, 11 sowie das Kabel 12 an einem Adapter 13 angeordnet, der bei Bedarf zusammen mit der Haarschneidemaschine 1' dem Ladeständer 5 entnommen werden kann. Dabei weist der Ladeständer 5 die Form eines offenen Ringes auf, so daß das Kabel 12 bei der Entnahme der Haarschneidemaschine mit dem Adapter ebenfalls dem Ladeständer 5 entnommen werden kann.

Zur Verriegelung des Adapters 13 mit der Haarschneidemaschine 1' ist ein magnetischer Kreis vorgesehen, der aus zwei Kernhälften 14, 15 besteht, wobei die Kernhälfte 15 in der Haarschneidemaschine 1' und die Kernhälfte 14 in dem Adapter angeordnet und mit einer Spule 16 versehen ist. Über einen Schalter 17 der Haarschneidemaschine 1' kann durch die Spule 16 Strom geleitet werden, so daß sich die Kernhälften anziehen. Der untere Teil des Gehäuses der Haarschneidemaschine 1' und der obere Rand des Adapters 13 überlappen sich, so daß der Adapter 13 mit der Haarschneidemaschine 1' ausreichend fest verbunden ist, solange Strom durch die Spule 16 fließt.

Damit der Adapter 13 nicht durch remanenten Magnetismus ungewollt - bei abgeschalteter Spule 16 - beim Hochheben der Haarschneidemaschine 1' aus dem Ladeständer 5 entfernt wird, sind Permanentmagnete 18, 19 vorgesehen, welche auf im Adapter 13 vorgesehene Ankerplatten 20, 21 wirken. Dabei kann der magnetische Kreis derart gestaltet sein, daß durch Streulinien, welche beim Einschalten der Spule 16 entstehen, die Kraft der Permanentmagnete 18, 19 kompensiert wird.

Fig. 2 zeigt ein Schaltbild des Ausführungsbeispiels nach Fig. 1. Dabei wird von dem nicht dargestellten Stromversorgungsgerät über die Adern des Kabels 12 (Fig. 1) den Schaltungspunkten 23, 24 eine Gleichspannung zugeführt. Die Spule 16 liegt zwischen dem Schaltungspunkt 23 und der Kontaktfeder 10 und erhält über die Kontakte 7, 8 und den Schalter 17 Strom, wenn der Adapter mit der Haarschneidemaschine mechanisch verbunden werden soll. Über eine Diode 25, welche als Verpolungsschutz dient, und einen Widerstand 26 wird der Akkumulator 27 geladen. Die Diode 25 dient ferner als Schutz vor Kurzschluß bei leitender Berührung der Kontakte und vor Entladung des Akkumulators 27 über den Innenwiderstand des Stromversorgungsgerätes bei Netzausfall oder gezogenem Netzstecker. Ein zweipoliger Schalter 3 dient zum Einschalten des Motors 28. Dabei ist sichergestellt, daß der Motor 28 bei Akkumulatorbetrieb direkt mit dem Akkumulator 27 und bei Netzbetrieb direkt, das heißt ohne Zwischenschaltung des Ladewiderstandes 26, über die Diode 25 mit der Gleichspannung verbunden wird.

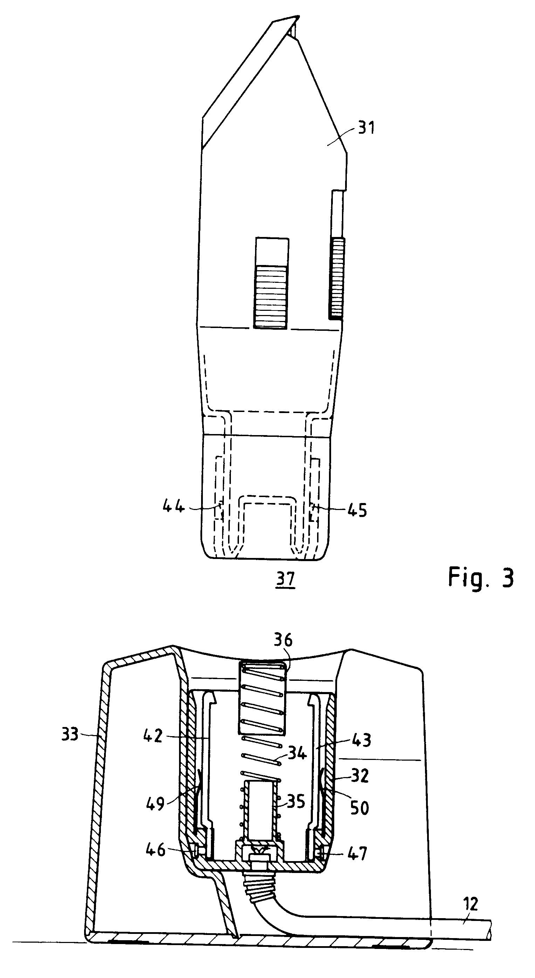

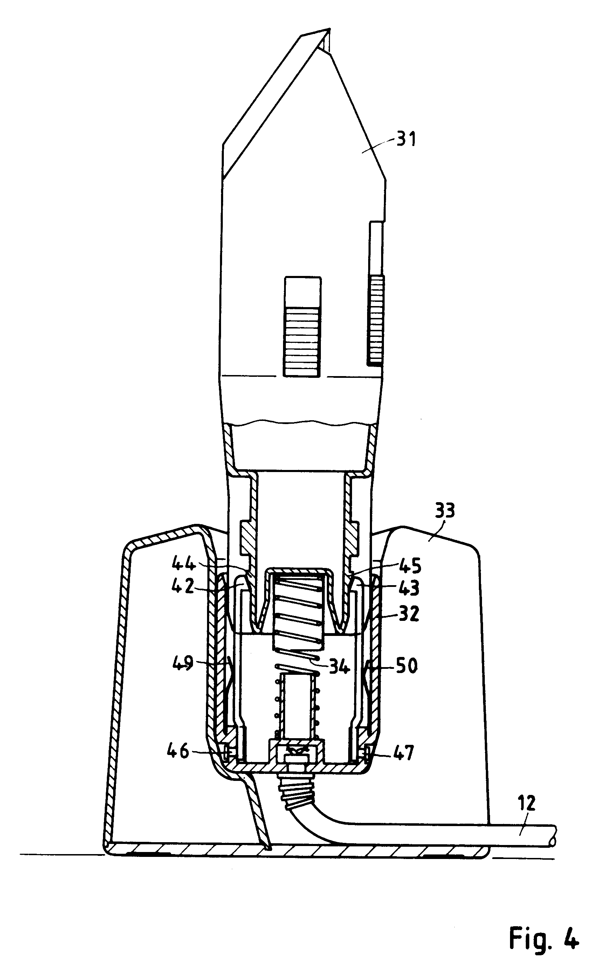

Bei dem Ausführungsbeispiel gemäß den Figuren 3 bis 7 ist in dem Adapter 32, der in seiner äußeren Form an einen Ladeständer 33 und die Haarschneidemaschine 31 angepaßt ist, axial eine Schraubenfeder 34 gelagert, welche durch ein Rohr 35 teilweise geführt ist. Der obere Teil der Schraubenfeder 34 ist mit einer Kappe 36 versehen. Am unteren Ende der Haarschneidemaschine 31 befindet sich eine Ausnehmung 37, in welche die Kappe 36 beim Aufsetzen der Haarschneidemaschine 31 eingreift. Durch die Schwerkraft der Haarschneidemaschine 31 wird die Schraubenfeder 34 zusammengedrückt, bis die in Fig. 4 durchgezogen dargestellte Position erreicht ist. Zur Kontaktgabe sind zwei weitere Schraubenfedern 38, 39 vorgesehen, welche Kontakte 40, 41 der Haarschneidemaschine 31 berühren und mit den Adern des Kabels 12 verbunden sind (Fig. 6).

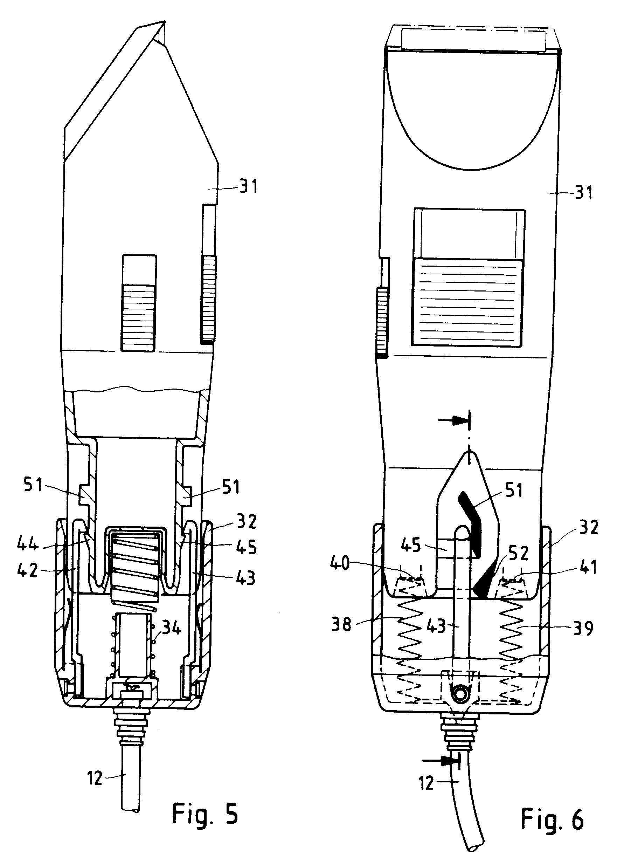

Zur mechanischen Verbindung des Adapters 32 mit der Haarschneidemaschine 31 dienen zwei Schnapphaken 42, 43. An der Haarschneidemaschine 31 sind zwei Schrägen 44, 45 angeordnet, über welche die ebenfalls angeschrägten Schnapphaken 42, 43 gleiten, wenn die Haarschneidemaschine 31 weiter nach unten gedrückt wird. Sobald die Schnapphaken 42, 43 hinter den Schrägen 44, 45 einrasten, ist der Adapter 32 mit der Haarschneidemaschine 31 verriegelt (Fig. 5 und Fig. 6).

Die Schnapphaken 42, 43 sind bei 46, 47 in dem Adapter 32 schwenkbar gelagert, wobei durch entsprechende Ausschnitte 48 der Schwenkwinkel begrenzt ist. Außerdem wird von Blattfedern 49, 50 auf die Schnapphaken 42, 43 eine Vorspannung ausgeübt.

Aus der in den Figuren 5 und 6 dargestellten Lage kann die Haarschneidemaschine 31 zusammen mit dem Adapter 32 dem Ladeständer 33 entnommen und mit angeschlossenem Adapter betrieben werden. Soll die Haarschneidemaschine 31 nach erfolgter Ladung des Akkumulators wieder ohne Adapter betrieben werden, so wird die Haarschneidemaschine weiter in den Ladeständer 33 gedrückt, wie es in Fig. 7 strichpunktiert dargestellt ist, und wieder entlastet, bis nur noch das Gewicht der Haarschneidemaschine auf die Federn wirkt. Dabei wird durch zwei erhabene Führungsteile 51, 52 der jeweilige Schnapphaken 43 (bzw. 42) um die von der Schräge 45 bzw. 44 gebildete Rastnase herumgeführt und zwischenzeitlich die strichpunktierte Stellung 53 des Schnapphakens 43 eingenommen.

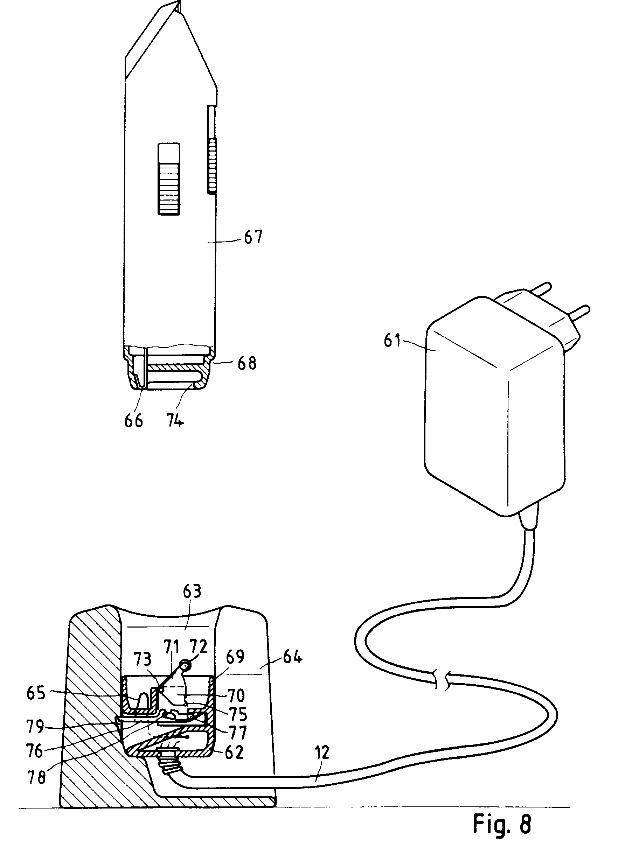

Bei dem Ausführungsbeispiel gemäß den Figuren 8 bis 11 ist ein in einen Netzstecker integriertes Stromversorgungsgerät 61 vorgesehen, das über das Kabel 12 mit dem Adapter 62 verbunden ist, der wie die Adapter der anderen Ausführungsbeispiele in seinen äußeren Abmessungen an eine Vertiefung 63 eines Ladeständers 64 angepaßt ist. Kontaktfedern 65 dienen zur elektrischen Verbindung des Kabels 12 mit Kontakten 66 der Haarschneidemaschine 67. Zur mechanischen Verbindung des Adapters 62 mit der Haarschneidemaschine 67 ist einerseits im unteren Bereich der Haarschneidemaschine 67 ein ringförmiger Absatz 68 vorgesehen, an welchen der obere Rand 69 des Adapters 62 anschließt.

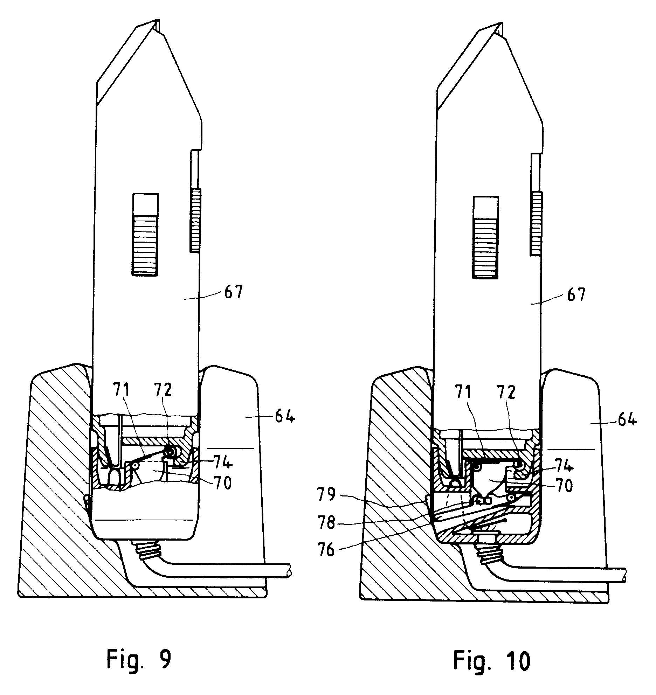

Im Adapter 62 ist ferner ein an sich bekanntes mechanisches bistabiles Element 70 angeordnet, welches einen Hebel 71 aufweist, dessen Ende mit einer Rolle 72 versehen ist. Der Hebel 71 ist um einen Drehpunkt 73 schwenkbar und kann die in den Figuren 8 und 9 einerseits und die in Fig. 10 andererseits dargestellten Stellungen einnehmen. Von einer Schenkelfeder im Drehpunkt 73 wird der Hebel 71 in der in Fig. 8 dargestellten Stellung gehalten. Der Hebel 71 ist vorzugsweise als Blechformteil ausgebildet. Neben einem die Rolle 72 tragenden Schenkel weist er einen zweiten Schenkel auf, der in einem Stift 75 endet. Dieser wiederum gerät bei einem Schwenken des Hebels 71 im Uhrzeigersinn in Berührung mit einem Sperrhebel 76, drückt diesen nach unten und rastet in einer Ausnehmung 78 des Sperrhebels 76 ein (Fig. 10). Der Sperrhebel 76 wird von einer Schenkelfeder 77 in die in Fig. 8 dargestellte Lage gebracht, wenn der Stift 75 nicht auf den Sperrhebel 76 einwirkt.

Bei der in Fig. 8 dargestellten Position greift das Ende des Sperrhebels 76 in eine Ausnehmung 79 des Ladeständer 64 ein, während bei der in Fig. 10 dargestellten Position der Sperrhebel 76 sich außerhalb der Ausnehmung 79 befindet.

Von der in Fig. 8 dargestellten Position ausgehend, wird beim Aufsetzen der Haarschneidemaschine 67 der Hebel 71 zwar etwas heruntergedrückt - jedoch, ohne daß der Stift 75 den Sperrhebel 76 betätigt. Beim Wiederaufnehmen der Haarschneidemaschine bleibt die Rolle 72 außerhalb der vom Vorsprung 74 gebildeten Hinterschneidung, so daß die Haarschneidemaschine 67 ohne den Adapter 62 dem Ladeständer 64 entnommen werden kann. Dabei ist durch das Eintauchen des Sperrhebels 76 in die Ausnehmung 79 sichergestellt, daß der Adapter 62 im Ladeständer 64 verbleibt. Fig. 9 zeigt diejenige Stellung, bei welcher der Hebel 71 durch das Eigengewicht der Haarschneidemaschine zwar etwas heruntergedrückt ist, jedoch die Verbindung zwischen Haarschneidemaschine 67 und Adapter 62 nicht verriegelt ist.

Wird zusätzlicher Druck nach unten auf die Haarschneidemaschine 67 ausgeübt, so wird die in Fig. 10 dargestellte Stellung erreicht. Der Hebel 71 ist dann durch den Sperrhebel 76 arretiert, wobei die Rolle 72 in die Hinterschneidung der Haarschneidemaschine 67 eingreift und somit den Adapter 62 und die Haarschneidemaschine 67 miteinander verriegelt.

In der ausgelenkten Stellung des Sperrhebels 76 gibt der Sperrhebel den Adapter 62 in dem Ladeständer 64 frei. Die Haarschneidemaschine 67 kann jetzt zusammen mit dem Adapter 62 dem Ladeständer 64 entnommen und mit Netzstrom betrieben werden.

Zum Abkoppeln des Adapters von der Haarschneidemaschine erfolgt abermals ein Druck auf die Haarschneidemaschine 67, worauf der Sperrhebel 76 seitlich (senkrecht zur Papierebene) ausschwenkt, und den Stift 75 und damit den Hebel 71 freigibt.

Derartige bistabile Elemente sind beispielsweise von Kugelschreibern oder von elektrischen Drucktasten bekannt. Bei elektrischen Drucktasten wird dabei meist ein aus Blech gestanzter Sperrhaken ähnlich dem Sperrhebel 76 verwendet, der in zwei Ebenen schwenkbar ist. Bei einem ersten Druck wird der Sperrhaken in einer ersten Ebene ausgelenkt und verriegelt einen Stift, der an dem beweglichen Teil der Drucktaste vorgesehen ist. Bei einem zweiten Druck wird der Sperrhaken in der anderen Ebene bewegt und gibt über eine Schräge den Stift wieder frei, so daß die Drucktaste ausgelöst wird.

Bei der in Fig. 8 gezeigten Stellung wird die Haarschneidemaschine 67 mit Strom aus dem Akkumulator betrieben. Beim Aufsetzen auf den Adapter 62 ohne besonderen Druck (Fig. 9) berühren die Kontaktfedern 65 die Kontakte 66, so daß der Akkumulator aufgeladen wird. Die Rolle 72 gleitet an einem Vorsprung 74 im unteren Teil der Haarschneidemaschine 67 vorbei, so daß die Haarschneidemaschine 67 dem Ladeständer 64 ohne Adapter 62 wieder entnommen werden kann.

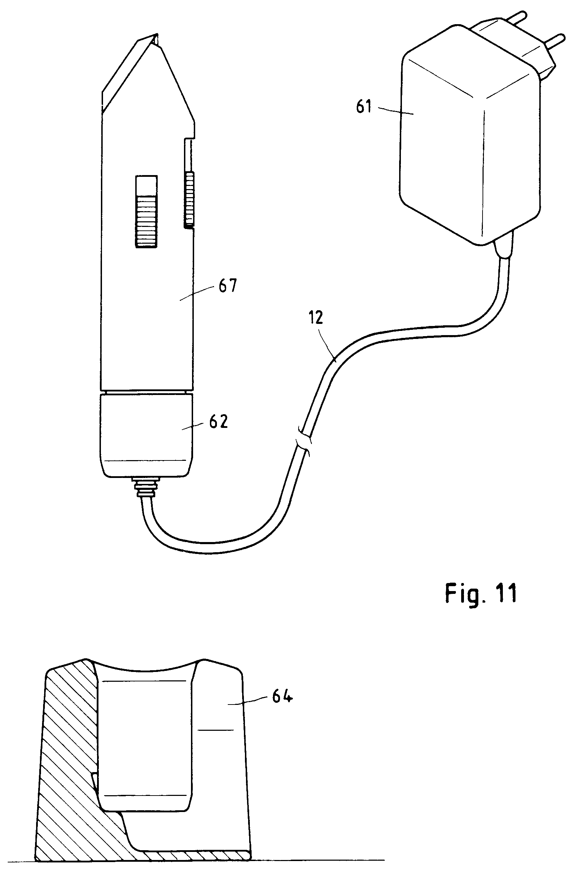

Durch einen stärkeren Druck auf die Haarschneidemaschine 67 gerät der Hebel 71 in die in Fig. 10 dargestellte Stellung, so daß die Rolle 72 hinter den Vorsprung 74 bewegt wird. Damit ist der Adapter 62 mit der Haarschneidemaschine 67 verriegelt und kann mit ihr zusammen dem Ladeständer 64 entnommen werden (Fig. 11).

Durch einen nochmaligen Druck auf die Haarschneidemaschine 67 springt der Hebel 71 wieder in die in Fig. 9 gezeigte Stellung, so daß beim nächsten Gebrauch der Haarschneidemaschine 65 der Adapter 62 im Ladeständer 64 verbleibt.

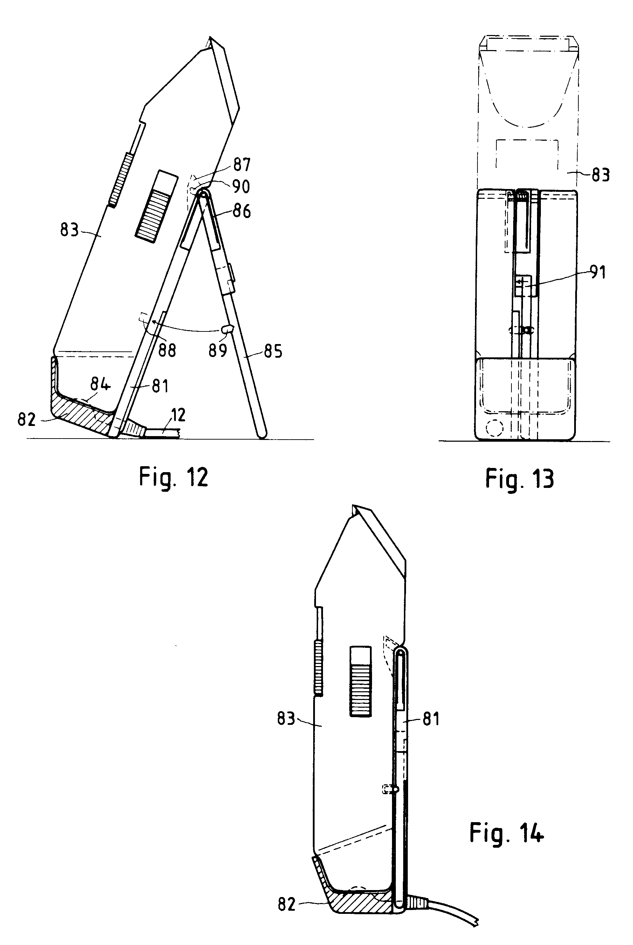

Bei dem Ausführungsbeispiel, das in den Figuren 12 bis 14 dargestellt ist, bilden Ladeständer und Adapter eine feste Baueinheit. Ein plattenförmiger erster Schenkel 81 des Ladeständer ist im unteren Bereich mit einem Adapter in Form einer schalenförmigen Auflage 82 versehen, welche den unteren Teil der Haarschneidemaschine 83 umfaßt. Außerdem enthält die Auflage 82 Kontaktfedern 84 zur Verbindung des Kabels 12 mit nicht dargestellten Kontakten der Haarschneidemaschine 83. Ein zweiter Schenkel 85 ist am ersten Schenkel 81 schwenkbar gelagert und bildet ein Standbein, das von einer Spreizfeder 86 gegen einen nicht dargestellten Anschlag vom ersten Schenkel 81 abgespreizt wird.

An der dem ersten Schenkel 81 zugewandten Seite der Haarschneidemaschine 83 sind zwei Ausnehmungen 87, 88 vorgesehen. Die in Fig. 12 dargestellte Stellung des Ladeständer erlaubt ein Herausnehmen der Haarschneidemaschine 83 aus dem Ladeständer und einen anschließenden Akkumulatorbetrieb. Soll wegen zu geringer Ladung des Akkumulators die Haarschneidemaschine 83 über das Kabel 12 beim Betrieb mit Strom versorgt werden, so wird die Haarschneidemaschine 83 einschließlich des Ladeständer derart ergriffen, daß das Standbein 85 in Richtung auf den ersten Schenkel 81 geschwenkt wird. Dabei gerät ein am Standbein 85 befindlicher Haken 89 in die Ausnehmung 88, so daß die Haarschneidemaschine 83 nicht nach oben aus der Auflage 82 hinausgleiten kann. Zusätzlich wird ein mit dem Standbein verbundener Hebel 90 innerhalb der Ausnehmung 87 derart geschwenkt, daß er ein Entfernen der Haarschneidemaschine 83 vom ersten Schenkel 81 verhindert. Somit ist der Ladeständer fest mit der Haarschneidemaschine 83 verbunden, welche dann mit Spannung aus dem Stromversorgungsgerät betrieben wird.

Um zu verhindern, daß durch Loslassen des Standbeins 85 die Verriegelung zwischen Haarschneidemaschine und Ladeständer aufgehoben wird, kann das Standbein 85 in Richtung des Pfeils 91 gegenüber dem ersten Schenkel 81 verschoben werden, so daß ein entsprechender Vorsprung des Standbeins 85 in eine Ausnehmung des ersten Schenkels 81 hineinragt und das Standbein 85 verriegelt.

Fig. 13 zeigt eine weitere Ansicht des Ladeständer in der Ablageposition mit angedeuteter Haarschneidemaschine. Fig. 14 stellt die Haarschneidemaschine mit dem Ladeständer in einer Arbeitsposition für Netzbetrieb dar.

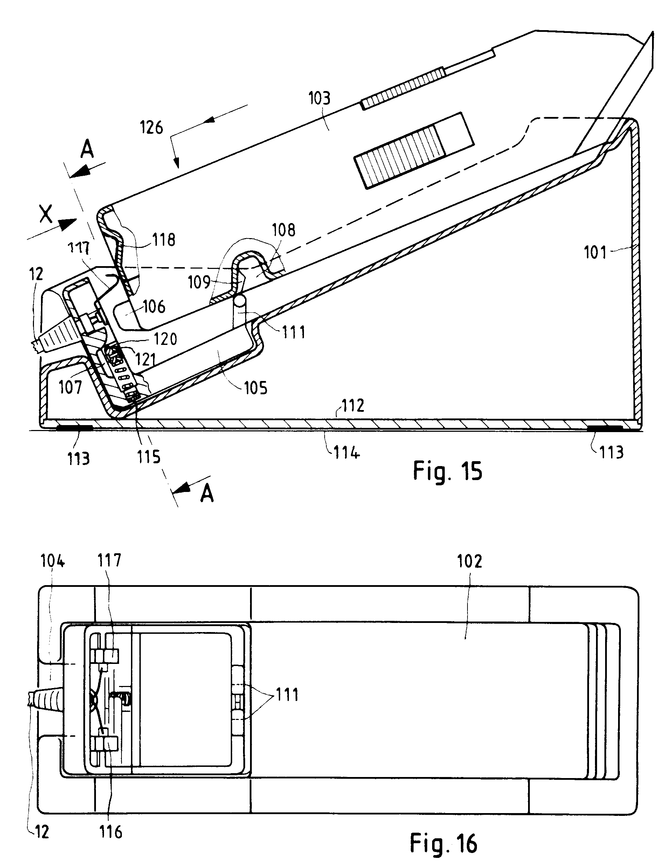

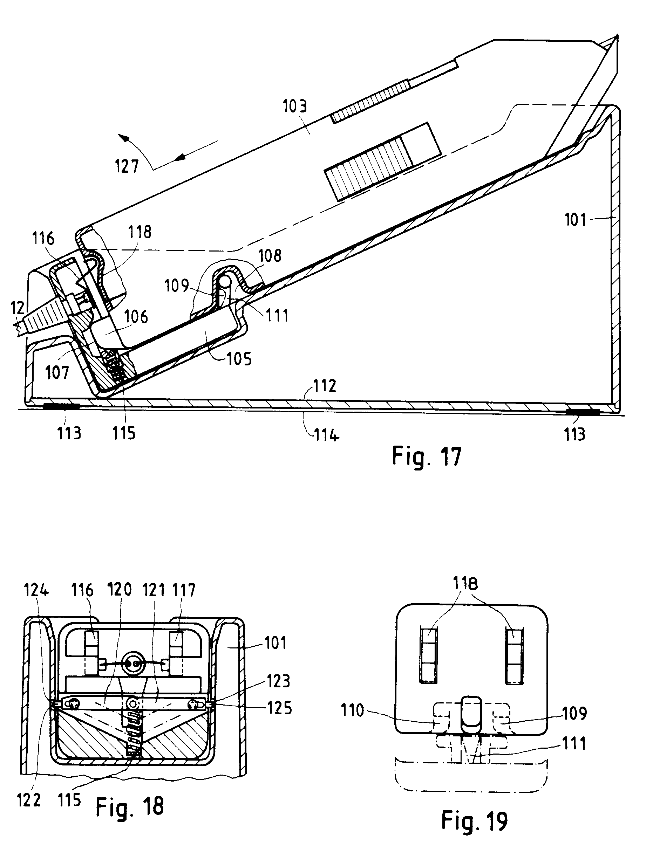

Die Figuren 15 bis 19 zeigen ein fünftes Ausführungsbeispiel, wobei Fig. 15 die auf dem Ladeständer abgelegte Haarschneidemaschine mit abgekoppelten Adapter und Fig. 17 mit angekoppelten Adapter darstellt. Fig. 16 ist eine Draufsicht auf den Ladeständer mit dem Adapter bei abgenommener Haarschneidemaschine, während Fig. 18 den Schnitt A-A (Fig. 15) und Fig. 19 die Ansicht X (Fig. 15) zeigen.

Bei dem in den Figuren 15 bis 19 dargestellten Ausführungsbeispiel ist ein rechteckiger Ladeständer 101 mit einer Vertiefung 102 versehen, in welche die Haarschneidemaschine 103 eingelegt werden kann. Am unteren Ende der Vertiefung 102 weist der Ladeständer 101 eine Aussparung 104 auf, die den Durchtritt des Kabels 12 ermöglicht. Die Vertiefung 102 ist im Bereich des unteren Endes zur Aufnahme des Adapters 105 ausgeformt. Der Adapter 105 ist winklig ausgebildet und umfaßt mit seinen Schenkeln im wesentlichen das untere Ende und teilweise eine Seite der Haarschneidemaschine 103.

Zur lösbaren Verbindung der Haarschneidemaschine 103 mit dem Adapter 105 ist am unteren Ende der Haarschneidemaschine ein Betätigungsvorsprung 106 vorgesehen, der bei angekoppeltem Adapter in eine Ausnehmung 107 des Adapters 105 eingreift. Ferner weist die Haarschneidemaschine eine Vertiefung 108 auf, an deren unterer Seitenwand zwei Rastnasen 109, 110 vorgesehen sind. Bei angekoppeltem Adapter (Fig. 17) dringt ein Rastbügel 111 des Adapters in die Vertiefung 108 ein, der hinter die Rastnasen 109, 110 greift. Eine Druckfeder 115 drückt den Betätigungsvorsprung 106 an die obere abgerundete Kante der Ausnehmung 107. Dadurch, durch die Schräge des Betätigungsvorsprungs 106 und durch Kontaktfedern 116, 117 wird die Haarschneidemaschine 103 gegen den Rastbügel 111 gedrückt und verriegelt den Adapter mit der Haarschneidemaschine.

Die elektrische Verbindung wird durch die Kontaktfedern 116, 117 am Adapter 105 und Kontakte 118 an der Haarschneidemaschine 103 gewährleistet. Dabei sind sowohl die Kontaktfedern 116, 117 als auch die Kontakte 118 derart ausgebildet, daß eine Kontaktgabe sowohl in der angekoppelten als auch in der abgekoppelten Stellung des Adapters erfolgt. Außerdem halten die Kontaktfedern 116, 117 die Haarschneidemaschine 103 in der in Fig. 15 gezeigten Stellung.

Um den Adapter im Ladeständer zu arretieren, wenn er nicht an die Haarschneidemaschine angekoppelt ist, steht die Druckfeder 115 mit einem aus zwei Schenkeln 120, 121 bestehenden Kniehebel in Verbindung. Die Enden der Schenkel 120, 121 sind als Riegel 122, 123 ausgebildet, die bei entspannter Druckfeder 115 in Löcher 124, 125 des Ladeständer 101 eingreifen und somit den Adapter arretieren. Bei angekoppelten Adapter (Fig. 17) wird die Druckfeder durch den Betätigungsvorsprung 106, der auf den Kniehebel drückt, zusammengedrückt, worauf der Kniehebel 120, 121 in die gestrichelt angedeutete Stellung gerät und die Riegel 122, 123 aus den Löchern 124, 125 herausgezogen werden und somit den Adapter freigeben.

Bei ausreichend geladenem Akkumulator wird die Haarschneidemaschine 103 lose auf den Ladeständer 101 aufgelegt, wie es in Fig. 15 dargestellt ist. Dabei wird der Akkumulator über die Kontaktfedern 116, 117 und die Kontakte 118 geladen. Bei erneutem Gebrauch wird die Haarschneidemaschine 103 einfach nach oben entnommen, solange ein Betrieb mit dem Akkumulator möglich ist. Wird jedoch die Haarschneidemaschine 103 benötigt, wenn die Ladung des Akkumulators zum Betrieb nicht mehr ausreicht, kann der Adapter 105 mit Hilfe der in Fig. 15 durch Pfeile 126 dargestellten Bewegung angekoppelt werden. Dabei gleitet der Betätigungsvorsprung 106 entgegen der Kraft der Druckfeder 115 in die Ausnehmung 107. Ist der Betätigungsvorsprung 106 vollständig in der Ausnehmung 107, kann der Rastbügel 111 über die Rastnasen 109, 110 gleiten, worauf der Adapter 105 angekoppelt ist (Fig. 17). Zum anschließenden Betrieb der Haarschneidemaschine 103 über das Kabel 12 wird die Haarschneidemaschine mit dem angekoppelten Adapter durch eine im wesentlichen geradlinige Bewegung dem Ladeständer 101 entnommen. Zum Abkoppeln des Adapters, wenn die Haarschneidemaschine wieder ohne Kabel betrieben werden soll, ist zunächst eine Verschiebung der Haarschneidemaschine und danach eine Drehbewegung erforderlich, wie es in Fig. 17 mit den Pfeilen 127 angedeutet ist.

Sowohl beim An- als auch beim Abkoppeln ist die jeweils zweite Bewegungsphase erst möglich, wenn die erste Bewegungsphase im wesentlichen abgeschlossen ist. Dadurch können die Bewegungen zum An- bzw. Abkoppeln relativ "sorglos" ausgeführt werden. Zum Ankoppeln beispielsweise genügt es, wenn auf dem unteren Teil der Haarschneidemaschine Druck etwa in einer aus beiden Pfeilen resultierenden Richtung ausgeübt wird. Sobald der Betätigungsvorsprung 106 in die Ausnehmung 107 eingedrungen ist, gleitet der Rastbügel 111 über die Rastnasen 109, 110, womit der Ankoppelvorgang abgeschlossen ist.

In die Bodenplatte 112 des Ladeständer 101 sind Füße 113 aus Werkstoff mit großem Haftkoeffizienten eingelassen, um ein Rutschen des Ladeständer 101 auf der jeweiligen Standfläche 114 zu verhindern.

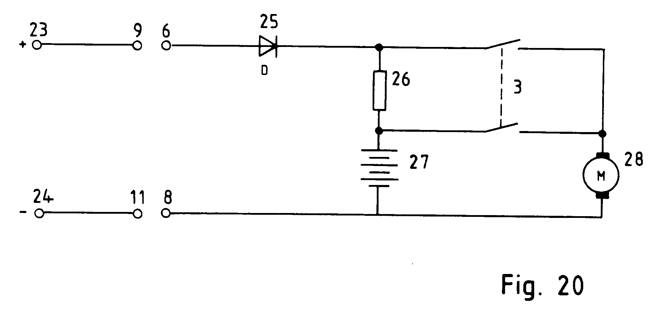

Fig. 20 zeigt ein Schaltbild für das zweite bis siebte Ausführungsbeispiel. Die Adern 23, 24 des Kabels sind mit je einer Kontaktfeder 9, 11 verbunden, welche die Kontakte 6, 8 der Haarschneidemaschine berühren, wenn die Haarschneidemaschine auf dem Adapter abgelegt ist. Die Kontaktgabe ist unabhängig davon, ob dabei der Adapter verriegelt ist. Wie bei der bereits beschriebenen Schaltung nach Fig. 2 sind eine Diode 25, ein Ladewiderstand 26, ein Akkumulator 27 und ein Motor 28 vorgesehen. Als Ein/AusSchalter dient ein zweipoliger Schalter 3.

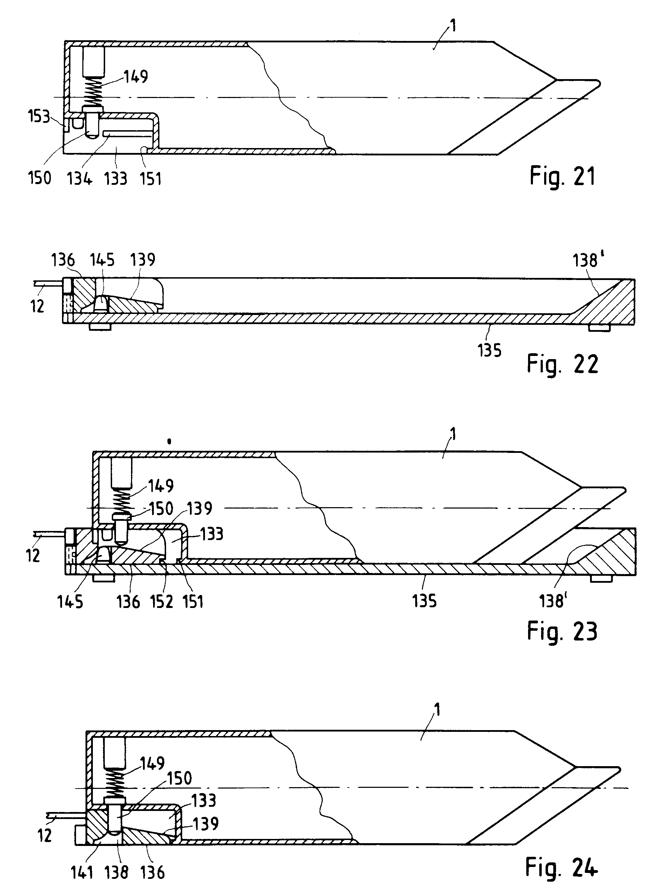

Ein sechstes Ausführungsbeispiel wird im folgenden anhand der Figuren 21 bis 30 erläutert. In Fig. 21 ist die Haarschneidemaschine 1 im linken Teil geschnitten dargestellt. Am unteren Ende weist die Haarschneidemaschine 1 eine Ausnehmung 133 auf, in welcher zwei Kontaktstreifen vorgesehen sind, von denen in Fig. 21 lediglich ein Kontaktstreifen 134 sichtbar ist. Bei Nichtbenutzung wird die Haarschneidemaschine 1 in einen Ladeständer 135 (Fig. 22) gelegt, in dem der Adapter 136 einrastend festgelegt ist.

Fig. 23 zeigt die abgelegte Haarschneidemaschine 1 in dem Ladeständer 135. In der dargestellten Lage, in der die Haarschneidemaschine 1 nicht die linke Endlage in dem Ladeständer 135 einnimmt, ist eine elektrische Verbindung zwischen den Kontaktstreifen 134 und am Adapter 136 angebrachten weiteren Kontaktstreifen 132 vorhanden. Der Akkumulator in der Haarschneidemaschine 1 wird somit aufgeladen. Damit die Haarschneidemaschine 1 auch bei einer ungenauen Ablage in die in Fig. 23 dargestellte Lage gerät, ist der Ladeständer 135 am vorderen Ende mit einer Schrägfläche 138' versehen, welche die Haarschneidemaschine 1 in die richtige Lage rutschen läßt.

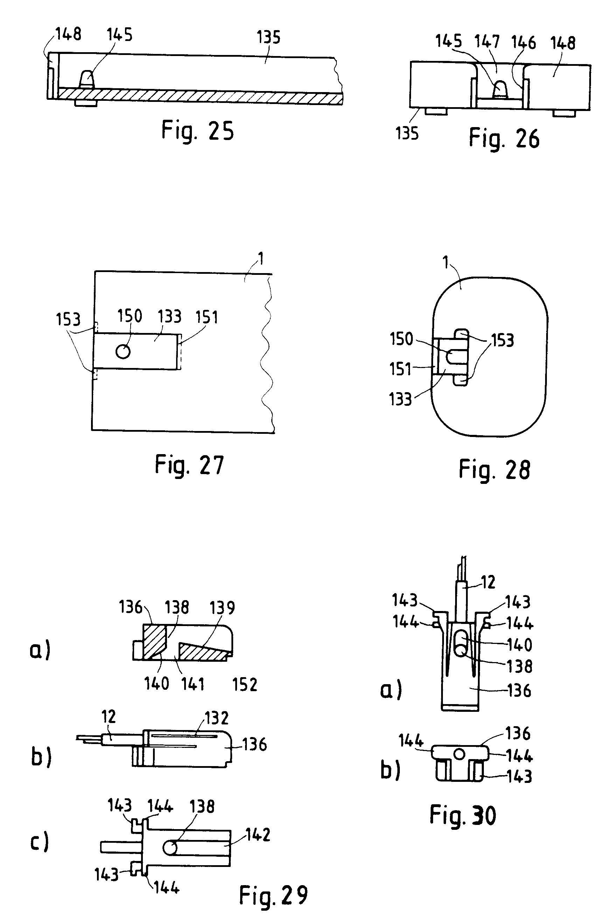

Fig. 24 zeigt die Haarschneidemaschine 1 mit angekuppeltem Adapter 136, so daß zwischen dem Kabel 12 und der Haarschneidemaschine 1 eine elektrische Verbindung hergestellt ist und die Haarschneidemaschine 1 bei entladenem Akkumulator mit Netzstrom betrieben werden kann. Der in die Bohrung eingedrungene Stift 150 hält den Adapter 136 in waagerechter Richtung, während der Adapter 136 senkrecht durch den Vorsprung 151 und den Absatz 152 sowie durch die Lappen 144 (Figuren 29 u. 30) in Verbindung mit den Ausnehmungen 153 (Figuren 27. u. 28) gehalten wird.

Weitere Details des Ladeständer und der Haarschneidemaschine sind aus den Figuren 25 bis 28 ersichtlich.

Der Adapter 136 ist in den Figuren 29 und 30 genauer dargestellt. Fig. 29a) stellt einen Längsschnitt dar, Fig. 29b) eine Seitenansicht und Fig. 29c) eine Draufsicht. Fig. 30 zeigt a) eine Bodenansicht und b) eine Vorderansicht. Der Adapter 136 besitzt eine von oben nach unten durchlaufende Bohrung 138, zu der eine Schrägfläche 139 ansteigt. Im unteren Bereich erweitert sich die Bohrung 138 über eine Wölbung 140 zu einem Langloch 141 (Fig. 29a)). Oberhalb der Schrägfläche 139 geht die Bohrung in einen durchlaufenden Schlitz 142 (Fig. 29c)) über. An dem dem Kabel 12 benachbarten Ende des Adapters 136 sind hakenförmige Spreizarme 143 vorgesehen, die federnd aufeinander zu bewegbar sind. Außerdem weist der Adapter 136 seitlich überstehende Lappen 144 oberhalb der Spreizarme 143 auf.

Im normalen Betriebszustand ist der Adapter 136 gemäß Fig. 22 in dem Ladeständer 135 festgelegt. Dabei wird der Adapter 136 einerseits durch einen fest im Ladeständer 135 angeordneten konischen Stift 145 gehalten, der in die Bohrung 138 des Adapters 136 eingreift. Andererseits hintergreifen die Spreizarme 143 die seitlichen Kanten 146 (Fig. 26) einer Ausnehmung 147 in der Endwand 148 des Ladeständer 135. Die Haarschneidemaschine 1 kann dann, wie in Fig. 23 gezeigt, abgelegt werden, wobei die elektrische Verbindung zwischen den Kontaktstreifen 134 und den am Adapter 136 angeordneten Kontaktstreifen 132 zustandekommt. Beim Aufnehmen der Haarschneidemaschine 1 bleibt der Adapter 136 mit dem Ladeständer 135 verbunden.

Wenn die Haarschneidemaschine 1 aus dem Stromnetz betrieben werden soll, weil der Akkumulator entladen ist, so kann in einfacher Weise der Adapter 136 vom Ladeständer 135 abgekuppelt und an die Haarschneidemaschine 1 angekuppelt werden, wie Fig. 24 zeigt. Dazu wird die Haarschneidemaschine 1 aus der in Fig. 23 dargestellten Ruhelage nach links in eine Endlage verschoben. Ein in der Haarschneidemaschine 1 gelagerter Stift 150 gleitet dann über die Schrägfläche 139 des Adapters 136, bis er den im Ladeständer festangeordneten Stift 145 berührt. Eine Schraubenfeder 149 wird dabei zusammengedrückt. Ferner werden dabei die Spreizarme 143 in nicht näher dargestellter Weise durch die Seitenwangen der Ausnehmung 133 zusammengedrückt und werden frei von den seitlichen Kanten 146.

Wird dann die Haarschneidemaschine 1 am oberen Ende nach oben gekippt oder einfach nach oben entnommen, so dringt der Stift 150 durch die Kraft der Schraubenfeder in die Bohrung 138 des Adapters 136 ein. Gleichzeitig wird der Adapter 136 durch einen Vorsprung 151 in der Ausnehmung 133, der hinter eine Kante 152 des Adapters 136 greift, mitgenommen. Somit ist die gewünschte Rastverbindung zwischen dem Adapter 136 und der Haarschneidemaschine 1 zustandegekommen. Dabei liegen die Lappen 144 des Adapters 136 in entsprechenden Ausnehmungen 153 (Fig. 27) der Haarschneidemaschine 1 (vgl. Fig. 28).

Wenn die Kupplung zwischen dem Adapter 136 und der Haarschneidemaschine 1 wieder gelöst werden soll, braucht die Haarschneidemaschine 1 nur in den Ladeständer 135 gelegt und leicht nach unten gedrückt zu werden. Durch die Wölbung 140 im Langloch 141 wird dann die Haarschneidemaschine 1 mittels des festen konischen Stiftes 145 im Ladeständer 135 in die linke Endposition gelenkt. Dann wird der Stift 150 durch den festen konischen Stift 145 hochgedrückt und aus der Bohrung 138 herausgeschoben. Wird dann die Haarschneidemaschine 1 wieder nach rechts in die in Fig. 23 gezeigte Lage verschoben, so hintergreifen die Spreizarme 143 die Kanten 146 der Endwand 148 und es kommt die in Fig. 23 gezeigte Rastverbindung zwischen dem Adapter 136 und dem Ladeständer 135 wieder zustande.

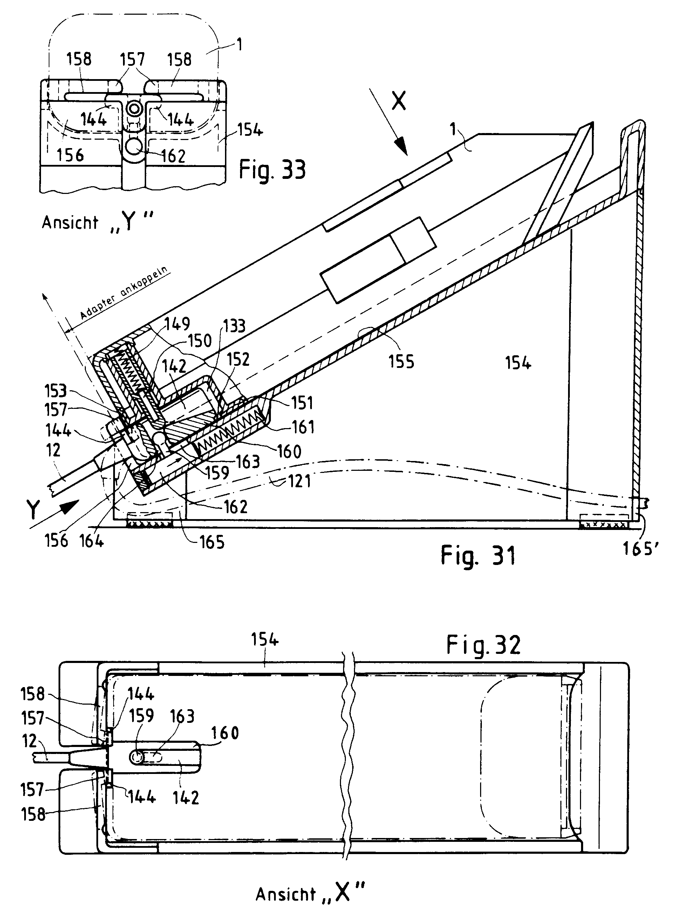

Bei dem anhand der Figuren 31 bis 34 erläuterten siebten Ausführungsbeispiel sind die zur Verbindung mit dem Adapter 160 dienenden Teile der Haarschneidemaschine 1 wie bei dem sechsten Ausführungsbeispiel (insbesondere Fig. 21) gestaltet. Der Adapter 160 selbst und die mit ihm zusammenwirkenden Teile des Ladeständer sowie der Ladeständer 154 sind jedoch abweichend gestaltet.

Fig. 31 zeigt den Ladeständer 154 mit an diesem angekoppeltem Adapter 160 und mit lose auf einer Auflagefläche 155 aufgelegter Haarschneidemaschine 1, die in ähnlicher Weise wie bei dem sechsten Ausführungsbeispiel mit dem Adapter 160 elektrisch verbunden ist. Der Übersichtlichkeit halber wurden die elektrischen Verbindungen in den Figuren 31 bis 34 jedoch nicht dargestellt. Zum Arretieren des Adapters 160 an dem Ladeständer 154 dienen Haken 157, welche über Federzungen 158 einstückig mit der Endwand 156 des Ladeständer 154 verbunden sind. Die Haken ragen im entspannten Zustand der Federzungen 158 über die Innenfläche der Endwand 156 hinaus und verhindern somit eine Bewegung des Adapters 160 in Richtung der Achse des Stifts 159, wenn der Adapter bis an die Endwand 156 zurückgeführt ist. Eine Bewegung des Adapters in Richtung des Pfeils Y ist nur gegen die Kraft einer weiteren Feder 161 möglich, welche in einer Bohrung des Ladeständer 154 gelagert ist und über ein Führungs- und Halteteil 162 den Stift 159, der durch ein Langloch 163 hindurchragt, in Richtung auf die Endwand 156 drückt.

In der dargestellten Position kann die Haarschneidemaschine 1 sowohl in Richtung des Pfeils Y als auch senkrecht dazu nach oben entnommen werden, ohne daß der Adapter 160 folgt.

Fig. 32 zeigt die Ansicht des Ladeständer 154 mit eingesetztem Adapter 160 aus der Richtung X (Fig. 31). Dabei ist die Haarschneidemaschine 1 strichpunktiert angedeutet.

Fig. 33 zeigt einen Teil des Ladeständer 154, insbesondere die Endwand 156 aus Richtung Y (Fig. 31), wobei die Haarschneidemaschine 1 ebenfalls strichpunktiert und nichtsichtbare Teile des Ladeständer 154 und des Adapters 160 gestrichelt angedeutet sind.

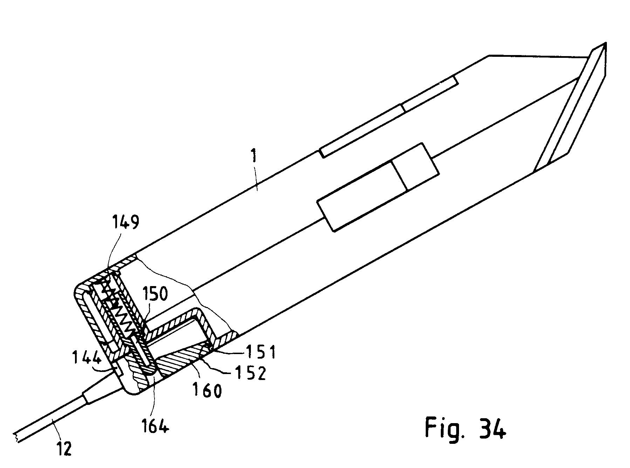

Unter Bezugnahme auf Fig. 31 wird im folgenden das Abkoppeln des Adapters 160 vom Ladeständer 154 bei gleichzeitigem Ankoppeln an die Haarschneidemaschine 1 beschrieben. Dazu wird die Haarschneidemaschine 1 entgegen der Richtung des Pfeils Y verschoben, bis die Haken 157 etwa bündig mit der Innenfläche der Endwand 156 abschließen. Gleichzeitig fluchtet der Stift 150 mit der Bohrung 164. Dabei dringen die Lappen 144 des Adapters in die Ausnehmungen 153 der Haarschneidemaschine und der Vorsprung 151 der Haarschneidemaschine in den Absatz 152 des Adapters ein, so daß der Adapter 160 beim darauffolgenden Hochheben entgegen der Richtung des Pfeils X der Haarschneidemaschine 1 folgt. Dabei wird der Stift 159 aus der Bohrung 164 gezogen, so daß der Stift 150 infolge der Kraft der Feder 149 in die Bohrung 164 eindringen kann. Somit ist der Adapter auch in der Richtung Y an der Haarschneidemaschine 1 verriegelt. Dieses ist in Fig. 34 nochmals dargestellt.

Nach beendetem Netzbetrieb (Fig. 34) kann die Haarschneidemaschine auf den Ladeständer 154 derart aufgesetzt werden (leicht nach unten gedrückt), daß die in Fig. 31 gezeigte Stellung selbsttätig wieder eingenommen wird, aus der ein Entnehmen der Haarschneidemaschine für den Netzbetrieb oder für den Akkumulatorbetrieb, wie bereits erläutert, möglich ist. Durch die kugelförmige Ausbildung und die Verschiebbarkeit des Stifts 159 tritt kein Klemmen auf - selbst wenn die Haarschneidemaschine 1 beim Entnehmen gekippt werden sollte.

Unterhalb der für das Kabel 12 vorgesehenen Ausnehmung in der Endwand 156 ist der Ladeständer 154 mit zwei weiteren nach unten offenen Ausnehmungen 165, 165' versehen, so daß das Kabel 12 unter dem Ladeständer 154 zum Adapter 160 geführt werden kann. Diese Verlegung des Kabels sieht ordentlicher aus und kann dann vorgenommen werden, wenn ein Netzbetrieb kaum zu erwarten ist. Das nach hinten verlaufende Kabel stört außerdem nicht.

**Patentansprüche**

1. Vorrichtung für ein elektrisches, Akkumulatoren aufweisendes Gerät (1') für wahlweisen Akkumulator- oder Netzbetrieb, bestehend aus einem Ladeständer (5) und einem Adapter (13), wobei das Gerät (1') bei Nichtgebrauch/Aufladen im Ladeständer (5) abgelegt ist und hierbei eine elektrische Verbindung mit dem im Ladeständer (5) lösbar befestigten Adapter (13) aufweist, der über ein Kabel (12) mit einer Stromversorgungsvorrichtung verbunden ist und wobei zwecks Netzbetriebs der Adapter (13) mit dem Gerät (1') verbindbar und zusammen mit dem Gerät (1') aus dem Ladeständer (5) entnehmbar ausgebildet ist, dadurch gekennzeichnet, daß für das Verbinden von Gerät (1') und Adapter (13) ein magnetischer Kreis (14,15) vorgesehen ist, der bei mit dem Gerät (1') verbundenen Adapter (13) geschlossen ist, und daß im Ladeständer (5) mindestens ein Permanentmagnet (18,19) angeordnet ist, der mit mindestens einer Ankerplatte (20,21) am Adapter (13) zusammenwirkt.

2. Vorrichtung für ein elektrisches, Akkumulatoren aufweisendes Gerät (31) für wahlweisen Akkumulator- oder Netzbetrieb, bestehend aus einem Ladeständer (33) und einem Adapter (32), wobei das Gerät (31) bei Nichtgebrauch/Aufladen im Ladeständer (33) abgelegt ist und hierbei eine elektrische Verbindung mit dem im Ladeständer (33) vorgesehenen Adapter (32) aufweist, der über ein Kabel (12) mit einer Stromversorgungsvorrichtung verbunden ist und wobei zwecks Netzbetriebs der Adapter (32) mit dem Gerät (31) verbindbar und zusammen mit dem Gerät (31) aus dem Ladeständer (33) entnehmbar ausgebildet ist,

dadurch gekennzeichnet, daß

für das mechanische Verbinden von Gerät (31) und Adapter (32) eine formschlüssige und mit federnden Mitteln ausgestattete Verriegelungseinrichtung (34,42,43,44,45) vorgesehen ist, die aus mindestens einer Feder (34), welche den Adapter (32) und das Gerät (31) auseinanderzudrücken sucht und mindestens einem Schnapphaken (42,43) besteht, der beim Zusammendrücken des Gerätes (31) und des Adapters (32) entgegen der Federkraft um mindestens eine Schräge (44,45) geführt wird und dahinter einrastet; und daß

der Schnapphaken (42,43) derart schwenkbar gelagert ist, daß er bei weiterem Druck entgegen der Federkraft von an dem Gerät (31) befindlichen Führungsteilen (51,52) um die Schräge (44,45) geführt wird, wodurch ein Entriegeln von Gerät (31) und Adapter (32) erfolgt.

3. Vorrichtung für ein elektrisches, Akkumulatoren aufweisendes Gerät (67) für wahlweisen Akkumulator- oder Netzbetrieb, bestehend aus einem Ladeständer (64) und einem Adapter (62), wobei das Gerät (67) bei Nichtgebrauch/Aufladen im Ladeständer (64) abgelegt ist und hierbei eine elektrische Verbindung mit dem im Ladeständer (64) lösbar befestigten Adapter (62) aufweist, der über ein Kabel (12) mit einer Stromversorgungsvorrichtung verbunden ist und wobei zwecks Netzbetriebs der Adapter (62) mit dem Gerät (67) verbindbar und zusammen mit dem Gerät (67) aus dem Ladeständer (64) entnehmbar ausgebildet ist,

dadurch gekennzeichnet, daß

ein mechanisches bistabiles Element (70) im Adapter (62) angeordnet ist, welches nach einem ersten Druck entgegen einer Feder (77) eine erste stabile Stellung und nach einem zweiten Druck eine zweite stabile Stellung einnimmt;

daß in der ersten Stellung das Gerät (67) mit dem Adapter (62) verbunden ist;und

daß in der zweiten Stellung die mechanische Verbindung zwischen dem Gerät (67) und dem Adapter (62) gelöst und der Adapter (62) mit dem Ladeständer (64) verriegelt ist.

4. Vorrichtung für ein elektrisches, Akkumulatoren aufweisendes Gerät (83) für wahlweisen Akkumulator- oder Netzbetrieb, bestehend aus einem Ladeständer (81,85) und einem Adapter (82), wobei das Gerät (83) bei Nichtgebrauch/Aufladen im Ladeständer (81,85) abgelegt ist und hierbei eine elektrische Verbindung mit dem im Ladeständer (81,85) vorgesehenen Adapter (82) aufweist, der über ein Kabel (12) mit einer Stromversorgungsvorrichtung verbunden ist und wobei zwecks Netzbetriebs der Adapter (82) mit dem Gerät (83) mechanisch verbindbar ist,

dadurch gekennzeichnet, daß

der Adapter (82) mit dem Ladeständer (81,85) eine feste Baueinheit bildet;

daß der Ladeständer (81,85) einen den unteren Teil des Gerätes (83) umfassenden, sich über den größten Teil einer Seite des Gerätes (83) in Längsrichtung erstreckenden, ersten Schenkel (81) aufweist;

daß an den ersten Schenkel (81) ein zweiter Schenkel (85) als Standbein angelenkt ist;

daß eine Feder (86) das Standbein (85) vom ersten Schenkel (81) gegen einen Anschlag abspreizt; und

daß das Standbein (85) mit Haken (89,90) versehen ist, die in Hinterschneidungen (87,88) des Gerätes (83) eingreifen, wenn sich das Standbein (85) im Bereich des ersten Schenkels (81) befindet.

5. Vorrichtung für ein elektrisches, Akkumulatoren aufweisendes Gerät ⟨ 103; 1; 1 ⟩ für wahlweisen Akkumulator- oder Netzbetrieb, bestehend aus einem Ladeständer ⟨ 101; 135; 154 ⟩ und einem Adapter ⟨ 105; 136; 160 ⟩, wobei das Gerät ⟨ 103; 1; 1 ⟩ bei Nichtgebrauch/Aufladen im Ladeständer ⟨ 101; 135; 154 ⟩ abgelegt ist und hierbei eine elektrische Verbindung mit dem im Ladeständer ⟨ 101; 135; 154 ⟩ lösbar befestigten Adapter ⟨ 105; 136; 160 ⟩ aufweist, der über ein Kabel (12) mit einer Stromversorgungsvorrichtung verbunden ist und wobei zwecks Netzbetriebs der Adapter ⟨ 105; 136; 160 ⟩ mit dem Gerät ⟨ 103; 1; 1 ⟩ mechanisch verbindbar und zusammen mit dem Gerät ⟨ 103; 1; 1 ⟩ aus dem Ladeständer ⟨ 101; 135; 154 ⟩ entnehmbar ausgebildet ist,

dadurch gekennzeichnet, daß

für das mechanische Verbinden von Gerät ⟨ 103; 1; 1 ⟩ und Adapter ⟨ 105; 136; 160 ⟩ eine formschlüssige und mit federnden Mitteln ausgestattete Verriegelungseinrichtung ⟨ 109, 110, 111, 106, 107; 150, 138, 151, 152, 153, 144; 150, 164, 151, 152, 153, 144 ⟩ vorgesehen ist; und daß dem Ladeständer ⟨ 101; 135; 154 ⟩ weitere Mittel ⟨ 124, 125; 145, 147; 157, 159, 161 ⟩ zugeordnet sind, die mit dem Adapter ⟨ 105; 136; 160 ⟩ derart zusammenwirken, daß einerseits bei Verriegelung von Gerät ⟨ 103; 1; 1 ⟩

und Adapter ⟨ 105; 136; 160 ⟩ eine gleichzeitige Entriegelung von Adapter ⟨ 105; 136; 160 ⟩ und Ladeständer ⟨ 101; 135; 154 ⟩ erfolgt und daß andererseits bei Entriegelung von Gerät ⟨ 103; 1; 1 ⟩ und Adapter ⟨ 105; 136; 160 ⟩ eine gleichzeitige Verriegelung von Adapter ⟨ 105; 136; 160 ⟩ und Ladeständer ⟨ 101; 135; 154 ⟩ erfolgt.

6. Vorrichtung nach Anspruch 1, dadurch gekennzeichnet,
daß der magnetische Kreis (14,15) mit einer Spule (16) versehen ist, welche über einen in dem Gerät (1') angeordneten Schalter (17) mit Strom beaufschlagbar ist.

7. Vorrichtung nach Anspruch 6, dadurch gekennzeichnet,
daß in dem Ladeständer (5) eine Vertiefung zur Aufnahme des Adapters (13) und des Gerätes (1') vorgesehen ist; und
daß der Permanentmagnet (18,19) im Bodenbereich der Vertiefung angeordnet ist.

8. Vorrichtung nach Anspruch 6, dadurch gekennzeichnet,
daß der magnetische Kreis (14, 15) derart ausgebildet ist, daß bei eingeschalteter Spule (16) ein Streufeld entsteht, welches die Wirkung der Permanentmagnete (18, 19) kompensiert.

9. Vorrichtung nach Anspruch 2, dadurch gekennzeichnet,
daß die Feder (34) im Adapter (32) angeordnet und als Schraubenfeder (34) ausgebildet ist; daß zwei Schnapphaken (42, 43) vorgesehen sind, die im wesentlichen parallel zur Längsachse des Geräts (31) verlaufen und bei einer Bewegung des Geräts (31) gegen die Federkraft, bezogen auf die Achse des Geräts (31), radial ausfedern und anschließend in Schrägen (44,45) an dem Gerät (31) einrasten.

10. Vorrichtung nach Anspruch 3, dadurch gekennzeichnet,
daß das mechanische bistabile Element (70) einen Hebel (71) zur lösbaren Verbindung mit dem Gerät (67) und einen Sperrhebel (76) aufweist, der den Hebel (71) in der einen Stellung arretiert und in der zweiten Stellung den Adapter (62) mit dem Ladeständer (64) verriegelt.

11. Vorrichtung nach Anspruch 4, dadurch gekennzeichnet,
daß im unteren Bereich des ersten Schenkels (81) Kontaktfedern (84) vorgesehen sind.

12. Vorrichtung nach Anspruch 4, dadurch gekennzeichnet,
daß das Gerät (83) im Bereich des Gelenks zwischen dem ersten Schenkel (81) und dem Standbein (85) eine erste Ausnehmung (87) und in einem mittleren Bereich der Schenkel eine zweite Ausnehmung (88) aufweist.

13. Vorrichtung nach Anspruch 4, dadurch gekennzeichnet,
daß der erste Schenkel (81) eine sich im wesentlichen über die Längsrichtung erstreckende Ausnehmung zur Aufnahme des Standbeins (85) aufweist.

14. Vorrichtung nach Anspruch 13, dadurch gekennzeichnet,
daß das Standbein (85) in Richtung der Achse des Gelenks verschiebbar ist, wobei zum Zwecke der Fixierung der Lage des Standbeins (85) im Bereich des ersten Schenkels (81) ein am Standbein (85) angeordneter Haken in eine Hinterschneidung am ersten Schenkel (81) eingreift.

15. Vorrichtung nach Anspruch 5, dadurch gekennzeichnet,
daß bei einem Abheben des Geräts (103) vom Ladeständer (101) mit einer im wesentlichen linearen Bewegung eine zuvor geschlossene Verbindung zwischen dem Gerät (103) und dem Adapter (105) erhalten bleibt und daß durch eine Kippbewegung die Verbindung zwischen dem Gerät (103) und dem Adapter (105) aufgehoben wird.

16. Vorrichtung nach Anspruch 5, dadurch gekennzeichnet,
daß die Verriegelungseinrichtung ein erstes und ein zweites Verbindungselement umfaßt, daß das erstes Verbindungselement (106, 109, 110) sich in Richtung auf das zweite Verbindungselement (107, 111) erweitert, wobei der erweiternde Teil des ersten Verbindungselements (106, 109, 110) von dem zweiten Verbindungselement (107,111) umfaßt wird; und daß der erweiternde Teil des ersten Verbindungselements (106, 109, 110) und das zweite Verbindungselement (107, 111) derart ausgebildet sind, daß der erweiternde Teil des ersten Verbindungselements (106, 109, 110) nur durch eine Kippbewegung aus dem zweiten Verbindungselement (107, 111) heraustreten kann.

17. Vorrichtung nach Anspruch 5, dadurch gekennzeichnet,
daß der Adapter (105) im wesentlichen die Form eines rechten Winkels aufweist, wobei ein Schenkel der Unterseite des Geräts (103) und der andere Schenkel dem unteren Teil einer Seite des Geräts (103) angepaßt ist; daß an der Unterseite des Geräts (103) ein Betätigungsvorsprung (106) vorgesehen ist, der bei angekoppeltem Adapter (105) in eine Ausnehmung (107) des Adapters (105) eingreift und daß an der Seite des Geräts (103) eine Vertiefung (108) vorgesehen ist, welche an der der Unterseite des Geräts (103) zugewandten Seite mit mindestens einer Rastnase (109, 110) versehen ist, in welche ein Rastbügel (111), der am anderen Schenkel des Adapters (105) angeordnet ist, bei angekoppelten Adapter (105) eingreift.

18. Vorrichtung nach Anspruch 17, dadurch gekennzeichnet, daß in dem einen Schenkel des Adapters (105) eine Druckfeder (115) vorgesehen ist, welche bei Eindringen des Betätigungsvorsprungs (106) in die Ausnehmung (107) gespannt wird.

19. Vorrichtung nach Anspruch 18, dadurch gekennzeichnet, daß mit der Druckfeder (115) Riegel (122, 123) in Wirkverbindung stehen, die bei entspannter Druckfeder (115) in Löcher (124, 125) des Gerätehalters (101) eingreifen.

20. Vorrichtung nach Anspruch 5, dadurch gekennzeichnet, daß die Verriegelungseinrichtung zwischen dem Adapter (136) und dem Ladeständer (135) durch einen in eine Bohrung (138) des Adapters (136) greifenden festen konischen Stift (145) des Ladeständer (135) und Spreizarme (143) des Adapters (136) gebildet wird; und daß die Spreizarme (143) bei mit dem Ladeständer (135) verbundenem Adapter (136) Kanten (146) einer Ausnehmung (147) des Ladeständer (135) hintergreifen.

21. Vorrichtung nach Anspruch 20, dadurch gekennzeichnet, daß die Spreizarme (143) beim Aufschieben des Gerätes (1) auf den Adapter (136) derart betätigbar sind, daß die Verriegelungseinrichtung zwischen dem Adapter (136) und dem Ladeständer (135) gelöst wird.

22. Vorrichtung nach Anspruch 5 dadurch gekennzeichnet, daß die Verriegelungseinrichtung zwischen dem Adapter (136) und dem Gerät (1) durch einen in eine Bohrung (138) des Adapters (136) eingreifenden Stift (150), der axial gegen die Wirkung einer Feder (149) verschiebbar im Gerät (1) gelagert ist, einen Absatz (152) des Adapters (136), der einen Vorsprung (151) des Gerätes (1) hintergreift, und Lappen (144) des Adapters (136), die in Ausnehmungen (153) des Gerätes (1) eingreifen, wenn der Adapter (136) mit dem Gerät (1) verbunden ist, gebildet wird.

23. Vorrichtung nach Anspruch 22, dadurch gekennzeichnet, daß der Adapter (136) mit einer zu dessen Bohrung (138) ansteigenden Schrägfläche (139) versehen ist, über die der federnd gelagerte Stift (150) des Gerätes (1) bei einer Längsverschiebung im Ladeständer (135) derart gleitet, daß er bei einer Verschiebung des Gerätes (1) in eine Endlage in die Bohrung (138) unter der Wirkung der Feder (149) eindringt und in dieser Endlage die Spreizarme (143) des Adapters (136) betätigt sind.

24. Vorrichtung nach Anspruch 5, dadurch gekennzeichnet, daß der Adapter (160) im wesentlichen in eine Ausnehmung (133) des Gerätes (1) paßt; daß ein axial federnd gelagerter Stift (150) aus dem Gerät (1) in die Ausnehmung (133) und bei mit dem Gerät (1) verbundenem Adapter (160) in eine Bohrung (164) des Adapters (160) ragt; und daß am Gerät (1) und an dem Adapter (160) Vorsprünge (151, 144) und weitere Ausnehmungen (152, 153) derart vorgesehen sind, daß eine Bewegung des Adapters (160) aus der Ausnehmung (153) in Längsrichtung des Stifts (150) verhindert wird.

25. Vorrichtung nach Anspruch 24, dadurch gekennzeichnet, daß der Adapter (160) einen von der Bohrung (164) ausgehenden, sich bis zu einem Ende des Adapters (160) in Längsrichtung erstrekkenden Schlitz (142) aufweist, der sich bis zum Ende des Adapters (160) vertieft; und daß am anderen Ende des Adapters (160) zwei seitlich herausragende Lappen (144) angeordnet sind.

26. Vorrichtung nach einem der Ansprüche 24 oder 25, dadurch gekennzeichnet, daß im Ladeständer (154) ein weiterer Stift (159) vorgesehen ist, der im wesentlichen senkrecht aus einer Auflagefläche (155) des Ladeständer (154) hinausragt und gegen die Kraft einer Feder (161) in Längsrichtung des Ladeständer (154) verschiebbar ist;

daß Haken (157) federnd über eine Endwand (156) des Ladeständer (154) derart hinausragen, daß sie teilweise den Adapter (160) übergreifen, wenn dieser an der Endwand (156) anliegt.

27. Vorrichtung nach Anspruch 26, dadurch gekennzeichnet,
daß der weitere Stift (159) einen Durchmesser aufweist, der kleiner als der Durchmesser der Bohrung (164) ist; und
daß das Ende des weiteren Stifts (159) kugelförmig entsprechend dem Durchmesser der Bohrung (164) ausgebildet ist.

28. Vorrichtung nach Anspruch 26, dadurch gekennzeichnet,
daß der Ladeständer (154) mit einer in Längsrichtung verlaufenden Bohrung versehen ist, in welcher eine Schraubenfeder (161) und ein Führungs- und Haltekörper (162) angeordnet sind; und
daß in den Führungs- und Haltekörper (162) der weitere Stift (159) eingesetzt ist, der durch ein Langloch (163) in der Auflagefläche (155) des Ladeständer (154) hindurchragt.

29. Vorrichtung nach Anspruch 5, dadurch gekennzeichnet,
daß der Ladeständer (154) eine schräge Auflagefläche (155) für das Gerät (1) aufweist, wobei das Kabel (12) aus dem unteren Ende der Auflagefläche (155) heraustritt, und
daß am unteren Ende der Auflagefläche (155) und unter dem oberen Ende der Auflagefläche (155) je eine nach unten offene Ausnehmung (165, 165') im Ladeständer (154) vorgesehen ist.

## Claims

1. A device for an electrical appliance (1') with batteries for optional battery or mains operation, consisting of a charging stand (5) and an adapter (13), the appliance (1') being deposited in the charging stand (5) when not in use or during charging and here having an electrical connection with the adapter (13), which is fastened detachably in the charging stand (5) and is connected to a power supply device via a cable (12), the adapter (13) being connectable to the appliance (1') for the purpose of mains operation and being formed so as to be removable from the charging stand (5) together with the appliance (1'),
characterised
in that a magnetic circuit (14, 15) is provided for connecting the appliance (1') and the adapter (13), this magnetic circuit (14, 15) being closed when the adapter (13) is connected to the appliance (1'), and in that at least one permanent magnet (18, 19) is arranged in the charging stand (5), this permanent magnet (18, 19) cooperating with at least one anchor plate (20, 21) on the adapter (13).

2. A device for an electrical appliance (31) with batteries for optional battery or mains operation, consisting of a charging stand (33) and an adapter (32), the appliance (31) being deposited in the charging stand (33) when not in use or during charging and here having an electrical connection with the adapter (32), which is provided in the charging stand (33) and is connected to a power supply device via a cable (12), the adapter (32) being connectable to the appliance (31) for the purpose of mains operation and being formed so as to be removable from the charging stand (33) together with the appliance (31),
characterised
in that a positive-locking interlocking device (34, 42, 43, 44, 45), equipped with spring means, is provided for the mechanical connection of the appliance (31) and the adapter (32), this interlocking device (34, 42, 43, 44, 45) consisting of at least one spring (34), which biasses the adapter (32) and the appliance (31) apart, and at least one snap hook (42, 43) which, when the appliance (31) and the adapter (32) are pressed together against the force of the spring, is guided around at least one bevelled edge (44, 45) and catches behind the latter; and in that the snap hook (42, 43) is swivellably mounted in such a manner that, when further pressure is applied against the force of the spring, it is guided around the bevelled edge (44, 45) by guide parts (51, 52) located on the appliance (31), thus unlocking the appliance (31) and the adapter (32).

3. A device for an electrical appliance (67) with batteries for optional battery or mains operation, consisting of a charging stand (64) and an adapter (62), the appliance (67) being deposited in the charging stand (64) when not in use or during charging and here having an electrical connection with the adapter (62), which is fastened detachably in the charging stand (64) and is connected to a power supply device via a cable (12), the adapter (62) being connectable to the appliance (67) for the purpose of mains operation and being formed so as to be removable from the charging stand (64) together with the appliance (67),
characterised

in that a mechanical bistable element (70) is arranged in the adapter (62), this bistable element (70) taking up a first stable position after a first pressure is applied against a spring (77) and taking up a second stable position after a second pressure is applied;
in that, in the first position, the appliance (67) is connected to the adapter (62); and
in that, in the second position, the mechanical connection between the appliance (67) and the adapter (62) is severed and the adapter (62) is interlocked with the charging stand (64).

4. A device for an electrical appliance (83) with batteries for optional battery or mains operation, consisting of a charging stand (81, 85) and an adapter (82), the appliance (83) being deposited in the charging stand (81, 85) when not in use or during charging and hare having an electrical connection with the adapter (82), which is provided in the charging stand (81, 85) and is connected to a power supply device via a cable (12), the adapter (82) being connectable mechanically to the appliance (83) for the purpose of mains operation,
characterised
in that the adapter (82) forms a compact constructional unit with the charging stand (81, 85); in that the charging stand (81, 85) has a first leg (81) which encloses the lower part of the appliance (83) and extends in the longitudinal direction over the majority of one side of the appliance (83);
in that a second leg (85) is hinged to the first leg (81) as a standing leg;
in that a spring (86) spreads the standing leg (85) apart from the first leg (81) against a limit stop; and
in that the standing leg (85) is provided with hooks (89, 90) which engage in undercuts (87, 88) in the appliance (83) when the standing leg (85) is in the region of the first leg (81).

5. A device for an electrical appliance (103; 1; 1) with batteries for optional battery or mains operation, consisting of a charging stand (101; 135; 154) and an adapter (105; 136; 160), the appliance (103; 1; 1) being deposited in the charging stand (101; 135; 154) when not in use or during charging and here having an electrical connection with the adapter (105; 136; 160), which is fastened detachably in the charging stand (101; 135; 154) and is connected to a power supply device via a cable (12), the adapter (105; 136; 160) being connectable mechanically to the appliance (103; 1; 1) for the purpose of mains operation and being formed so as to be removable from the charging stand (101; 135; 154) together with the appliance (103; 1; 1),
characterised
in that a positive-locking interlocking device (109, 110, 111, 106, 107; 150, 138, 151, 152, 153, 144; 150, 164, 151, 152, 153, 144), equipped with spring means, is provided for the mechanical connection of the appliance (103; 1; 1) and the adapter (105; 136; 160); and in that further means (124, 125; 145, 147; 157, 159, 161) are assigned to the charging stand (101; 135; 154), these means cooperating with the adapter (105; 136; 160) in such a manner that, on the one hand, when the appliance (103; 1; 1) and the adapter (105; 136; 160) are interlocked, the adapter (105; 136; 160) and the charging stand (101; 135; 154) are simultaneously unlocked and, on the other hand, when the appliance (103; 1; 1) and the adapter (105; 136; 160) are unlocked, the adapter (105; 136; 160) and the charging stand (101; 135; 154) are simultaneously interlocked.

6. A device according to Claim 1, characterised
in that the magnetic circuit (14, 15) is provided with a coil (16) which can be loaded with current via a switch (17) arranged in the appliance (1').

7. A device according to Claim 6, characterised
in that an indentation for receiving the adapter (13) and the appliance (1') is provided in the charging stand (5); and
in that the permanent magnet (18, 19) is arranged in the base region of the indentation.

8. A device according to Claim 6, characterised
in that the magnetic circuit (14, 15) is formed in such a manner that, when the coil (16) is switched on, this produces a stray field which compensates for the action of the permanent magnets (18, 19).

9. A device according to Claim 2, characterised
in that the spring (34) is arranged in the adapter (32) and is formed as a spiral spring (34); in that two snap hooks (42, 43) are provided which extend substantially parallel to the longitudinal axis of the appliance (31) and, during a movement of the appliance (31) against the force of the spring, spring out radially relative to the axis of the appliance (31) and subsequently catch behind bevelled edges (44, 45) on the appliance (31).

10. A device according to Claim 3, characterised
in that the mechanical bistable element (70) has a lever (71) for detachable connection to the appliance (67) and a locking lever (76) which arrests the lever (71) in the first position and in the second position interlocks the adapter (62) with the charging stand (64).

11. A device according to Claim 4, characterised in that contact springs (84) are provided in the lower region of the first leg (81).

12. A device according to Claim 4, characterised in that the appliance (83) has a first recess (87) in the region of the joint between the first leg (81) and the standing leg (85) and has a second recess (88) in a central region of the legs.

13. A device according to Claim 4, characterised in that the first leg (81) has a recess for receiving the standing leg (85), this recess extending substantially over the longitudinal direction

14. A device according to Claim 13, characterised in that the standing leg (85) is displaceable in the direction of the axis of the joint and, for the purpose of fixing the position of the standing leg (85) in the region of the first leg (81), a hook arranged on the standing leg (85) engages in an undercut on the first leg (81).

15. A device according to Claim 5, characterised in that, when the appliance (103) is lifted from the charging stand (101) with a substantially linear movement, a previously closed connection between the appliance (103) and the adapter (105) is retained and in that the connection between the appliance (103) and the adapter (105) is broken by a tipping movement.

16. A device according to Claim 5, characterised in that the interlocking device comprises a first and a second connecting element, in that the first connecting element (106, 109, 110) expands in the direction of the second connecting element (107, 111), the expanding part of the first connecting element (106, 109, 110) being enclosed by the second connecting element (107, 111); and in that the expanding part of the first connecting element (106, 109, 110) and the second connecting element (107, 111) are formed in such a manner that the expanding part of the first connecting element (106, 109, 110) can only come out of the second connecting element (107, 111) as a result of a tipping movement.

17. A device according to Claim 5, characterised in that the adapter (105) substantially has the shape of a right angle, one leg being adapted to the lower side of the appliance (103) and the other leg being adapted to the lower part of one side of the appliance (103); in that an activating projection (106) is provided on the lower aide of the appliance (103), this activating projection (106) engaging in a recess (107) in the adapter (105) when the latter is attached and in that an indentation (108) is provided on the side of the appliance (103), this indentation (108) being provided with at least one catch lug (109, 110) on the side facing the lower side of the appliance (103), and a catch loop (111), arranged on the other leg of the adapter (105), engaging in this catch lug (109, 110) when the adapter (105) is attached.

18. A device according to Claim 17, characterised in that a pressure spring (115) is provided in the first leg of the adapter (105), this pressure spring (115) being tensioned when the actuating projection (106) enters the recess (107).

19. A device according to claim 18, characterised in that bars (122, 123) are in operative connection with the pressure spring (115), these bars (122, 123) engaging in holes (124, 125) in the appliance holder (101) when the pressure spring (115) is released.

20. A device according to Claim 5, characterised in that the interlocking device between the adapter (136) and the charging stand (135) is formed by a rigid conical pin (145) of the charging stand (135), this pin (145) engaging in a borehole (138) in the adapter (136), and by expanding arms (143) of the adapter (136); and in that, when the adapter (136) is connected to the charging stand (135), the expanding arms (143) engage behind edges (146) of a recess (147) in the charging stand (135).

21. A device according to Claim 20, characterised in that, when the appliance (1) is pushed onto the adapter (136), the expanding arms (143) can be activated in such a manner that the interlocking device between the adapter (136) and the charging stand (135) is released.

22. A device according to Claim 5, characterised in that the interlocking device between the adapter (136) and the appliance (1) is formed by a pin (150), which engages in a borehole (138) in the adapter (136) and is mounted in the appliance (1) so as to be displaceable axially against the action of a spring (149), by a shoulder (152) of the adapter (136), which shoulder (152) engages behind a projection (151) of the appliance (1), and by tabs (144) of the adapter (136), which engage in recesses (153) in the appliance (1) when the adapter (136) is connected to the appliance (1).

23. A device according to Claim 22, characterised in that the adapter (136) is provided with an inclined surface (139) rising to the borehole (138) of the adapter (136), the spring-mounted pin (150) of the appliance (1) sliding over this inclined surface (139) during a longitudinal displacement in the charging stand (135) in such a manner that, when the appliance (1) is displaced into an end position, it enters the borehole (138) under the action of the spring (149) and the expanding arms (143) of the adapter (136) are activated in this end position.

24. A device according to Claim 5, characterised in that the adapter (160) fits substantially into a recess (133) in the appliance (1); in that an axially spring-mounted pin (150) projects out of the appliance (1) into the recess (133) and, when the adapter (160) is connected to the appliance (1), projects into a borehole (164) in the adapter (160); and in that projections (151, 144) and further recesses (152, 153) are provided on the appliance (1) and on the adapter (160) in such a manner that the adapter (160) is prevented from moving out of the recess (153) in the longitudinal direction of the pin (150).

25. A device according to Claim 24, characterised in that the adapter (160) has a slit (142) which starts at the borehole (164), extends in the longitudinal direction to one end of the adapter (160) and deepens until it reaches the end of the adapter (160); and in that two tabs (144), which project laterally, are arranged at the other end of the adapter (160).

26. A device according to either of Claims 24 or 25, characterised in that an additional pin (159) is provided in the charging stand (154), this pin (159) projecting out of a bearing surface (155) of the charging stand (154) in a substantially perpendicular manner and being displaceable in the longitudinal direction of the charging stand (154) against the force of a spring (161); in that hooks (157) project resiliently over an end wall (156) of the charging stand (154) in such a manner that they engage over the adapter (160) partially if the latter rests against the end wall (156).

27. A device according to Claim 26, characterised in that the additional pin (159) has a diameter which is smaller than the diameter of the borehole (164); and in that the end of the additional pin (159) is formed spherically corresponding to the diameter of the borehole (164).

28. A device according to Claim 26, characterised in that the charging stand (154) is provided with a borehole extending in the longitudinal direction, a spiral spring (161) and a guiding and holding body (162) being arranged in this borehole; and in that the additional pin (159) is inserted into the guiding and holding body (162), this pin (159) projecting through an oblong hole (163) in the bearing surface (155) of the charging stand (154).

29. A device according to Claim 5, characterised in that the charging stand (154) has an inclined bearing surface (155) for the appliance (1), the cable (12) emerging from the lower end of the bearing surface (155), and in that a recess (165, 165'), which is open at the bottom, is provided in the charging stand (154) both at the lower end of the bearing surface (155) and underneath the upper end of the bearing surface (155).

**Revendications**

1. Dispositif destiné à un appareil électrique (1') comportant des accumulateurs pouvant fonctionner au choix sur le secteur ou sur les accumulateurs, se composant d'un socle chargeur (5) et d'un adaptateur (13), l'appareil (1'), quand il n'est pas en service ou qu'il est en charge, reposant sur le socle chargeur (5) et comportant à cet effet une liaison électrique avec l'adaptateur (13) fixé de façon amovible dans le socle chargeur (5) qui est relié par un câble (12) au dispositif d'alimentation en courant, et dans lequel, en vue du fonctionnement sur le secteur, l'adaptateur (13) est constitué de façon à être relié à l'appareil (1') et à pouvoir être déconnecté du socle chargeur (5) en même temps que l'appareil (1'), caractérisé en ce que pour la jonction de l'appareil (1') et de l'adaptateur (12) on prévoit un circuit magnétique (14,15) qui est fermé lorsque l'adaptateur (13) est relié à l'appareil (1'), et en ce qu'au moins un aimant permanent (18, 19) est placé dans le socle chargeur (5), qui coopère avec au moins une plaque de contact (20, 21) sur l'adaptateur (13).

2. Dispositif destiné à un appareil électrique (31) comportant des accumulateurs pouvant fonctionner sur le secteur ou sur les accumulateurs, se composant d'un socle chargeur (33) et d'un adaptateur (32), l'appareil (31), quand il n'est pas en service ou qu'il est en charge, reposant sur le socle chargeur (33) et comportant à cet effet une liaison électrique avec l'adaptateur (32), fixé de façon amovible dans le socle chargeur (33) qui est relié par un câble (12) au dispositif d'alimentation en courant, et dans lequel, en vue du fonctionnement sur le secteur, l'adaptateur (32) est relié à l'appareil (31) et peut être retiré du socle chargeur (33) en même temps que l'appareil (31), caractérisé en ce que pour la liaison mécanique de l'appareil (31) et de l'adaptateur (32) on prévoit un dispositif de verrouillage (34, 42, 43, 44, 45) à concordance de forme et muni de moyens élastiques qui se composent d'au moins un ressort (34) qui tend à écarter l'un de l'autre l'appareil (31) et l'adaptateur (32) au moins un crochet d'encliquetage (42, 43), qui lors d'une compression de l'appareil (31) et de l'adaptateur (32) à l'encontre de la force du ressort est guidé autour d'au moins une rampe (44, 45) et s'encliquette à l'arrière de celle-ci; et en ce que le crochet d'encliquetage (42, 43) est supporté de façon à pouvoir pivoter, de telle sorte que lors d'une pression prolongée à l'encontre de la force du ressort des éléments de guidage (51, 52) se trouvant sur l'appareil (31), est guidé autour des rampes (44, 45), un déverrouillage de l'appareil (31) et de l'adaptateur (32) se produisant alors.

3. Dispositif destiné à un appareil électrique (67) comportant des accumulateurs pouvant fonctionner sur le secteur ou sur les accumulateurs, se composant d'un socle chargeur (64) et d'un adaptateur (62), l'appareil (67), quand il n'est pas en service ou qu'il est en charge, reposant sur le socle chargeur (64) et comportant à cet effet une liaison électrique avec l'adaptateur (62) fixé de façon amovible dans le socle chargeur (64) qui est relié par un câble (12) à un dispositif d'alimentation en courant, et dans lequel, en vue du fonctionnement sur le secteur, l'adaptateur (62) est peut être relié à l'appareil (67) et pouvoir être déconnecté du socle chargeur (64) en même temps que l'appareil (67), caractérisé en ce que, placé dans l'adaptateur (62), un élément mécanique bistable (70) prend, après une première pression à l'encontre d'un ressort (77), une première position stable, et, après une seconde pression, une seconde position stable, en ce que dans le première pression l'appareil (67) est relié à l'adaptateur (63) ; et en ce que dans la deuxième position la jonction mécanique entre l'appareil (67) et l'adaptateur (52) est déclenchée et l'adaptateur (62) est verrouillé avec le socle chargeur (64).

4. Dispositif pour un appareil électrique (83) comportant des accumulateurs pour un fonctionnement au choix sur le secteur ou sur les accumulateurs, se composant d'un socle chargeur (81, 85) et d'un adaptateur (82), l'appareil (83), quand il n'est pas en service ou qu'il est en charge, étant déposé le socle chargeur (81, 85), et présentant alors une jonction électrique avec l'adaptateur (82) prévu dans le socle (81, 85), qui est relié à une source d'alimentation en courant par un câble (12), et pouvant être relié mécaniquement avec l'appareil (83) dans le cas de fonctionnement de l'adaptateur (82) sur le secteur, caractérisé en ce que l'adaptateur (82) forme avec le socle chargeur (81, 85) un ensemble monobloc; en ce que le socle chargeur (81, 85) comporte une premièe branche (81) entourant la partie inférieure de l'appareil (83) et s'étendant sur la plus grande partie d'un côté de l'appareil (83); en ce que sur la première branche (81) s'articule une seconde branche (81) en tant que jambe d'appui ; en ce qu'un ressort (86) écarte la jambe d'appui (85) de la première branche (81) contre une butée; et en ce que la jambe d'appui (85) est munie de crochets (89,90) qui s'engagent dans des découpes (87,88) à l'arrière de l'appareil (83), quand la jambe d'appui (85) se trouve dans la zone de la première branche (81)

5. Dispositif destiné à un appareil électrique (103; 1; 1) comportant des accumulateurs pouvant fonctionner au choix sur le secteur ou sur les accumulateurs, se composant d'un socle chargeur (101; 135; 154) et d'un adaptateur (105. 136; 160), l'appareil (103; 1; 1'), quand il n'est pas en service ou qu'il est en charge, reposant sur le socle chargeur (101; 135; 154) et comportant à cet effet une liaison électrique avec l'adaptateur (105, 136,; 160), fixé de façon amovible dans le socle chargeur (101; 135; 154) qui est relié par un câble (12) à un dispositif d'alimentation en courant, l'adaptateur (105, 136, 160) étant, en vue du fonctionnement sur le secteur, constitué de façon à pouvoir être relié à l'appareil (103; 1; 1) et à pouvoir être déconnecté du socle chargeur (101; 135; 154) en même temps que l'appareil (103, 1 ; 1'), caractérisé en ce que pour la jonction mécanique de l'appareil (103, 1 ; 1') et de l'adaptateur (105, 136, 160) on prévoit un système de verrouillage à condorcance de forme (109, 110,111, 106, 107, 150, 138, 151, 152, 153, 144, 150, 164, 151, 152, 153, 144) muni de moyens faisant ressort; et en ce que d'autres moyens (124, 125, 145, 147, 157, 159, 161) sont associés au socle chargeur (101; 135; 160), qui coopèrent avec l'adaptateur (105; 136; 160), de telle sorte que d'une part lors du verrouillage de l'appareil (103; 1; 1') et de l'adaptateur (105; 136; 160) il se produit un déverrouillage simultané de l'adaptateur (105; 136; 160) et du socle chargeur (101; 135; 154) et que d'autre part, lors du déverrouillage de l'appareil (103; 1; 1') et de l'adaptateur (105; 136; 160) il se produit un verrouillage simultané de l'adaptateur (105; 136; 160) et du socle chargeur (101; 135; 154).

6. Dispositif selon la revendication 1, caractérisé en ce que le circuit magnétique (14, 15) est muni d'une bobine (16) qui peut être alimentée par un courant grâce à un interrupteur (17) disposé dans l'appareil (1').

7. Dispositif selon la revendication 6, caractérisé en ce que dans le socle chargeur (5) est prévue une cavité destinée à la réception de l'adaptateur (13) et de l'appareil (1'); et en ce que l'aimant permanent (18, 19) est placé dans la zone de fond de la cavité.

8. Dispositif selon la revendication 6, caractérisé en ce que le circuit magnétique (14, 15) est formé de telle sorte que grâce à la connexion d'une bobine (16), il se produit un champ de fuite qui compense l'effet des aimants permanents (18, 19).

9. Dispositif selon la revendication 2, caractérisé en ce que le ressort (34) est placé dans l'adaptateur (32) et se présente sous la forme d'un ressort hélicoïdal (34); en ce que sont prévus deux crochets d'encliquetage (42, 43), s'étendant pratiquement parallèlement à l'axe longitudinal de l'appareil (31), et lors d'un déplacement de l'appareil (31) à l'encontre de la force du ressort, par rapport à l'axe de l'appareil (31), s'accrochent ensuite en faisant ressort radialement et sur les rampes (44, 45).

10. Dispositif selon la revendication 3, caractérisé en ce que l'élément bistable mécanique (70) comporte pour la liaison amovible avec l'appareil (67), un levier (71) et un levier de blocage (76) qui bloque le levier (71) dans une position et verrouille l'adaptateur (62) avec le socle chargeur (64) dans la seconde position.

11. Dispositif selon la revendication 4, caractérisé en ce que dans la zone inférieure de la première branche (21) sont prévus des ressorts de contact (84).

12. Dispositif selon la revendication 4, caractérisé en ce que l'appareil (83) comporte dans la zone de l'articulation entre la première branche (81) et la jambe d'appui (85) une première cavité (87) et dans une zone médiane de la branche , une seconde cavité (88).

13. Dispositif selon la revendication 4, caractérisé en ce que la première branche (81) comporte pour la réception de la jambe d'appui (85), une cavité s'étendant pour l'essentiel dans le sens longitudinal.

14. Dispositif selon la revendication 13, caractérisé en ce que la jambe d'appui (85) peut être déplacée dans la direction de l'axe d'articulation, un crochet placé sur la jambe d'appui (85) s'engageant dans une découpe arrière sur la première branche (81) pour la fixation de la position de la jambe d'appui (85) dans la zone de la première branche (81).

15. Dispositif selon la revendication 5, caractérisé en ce que lors d'un soulèvement de l'appareil (103) du socle chargeur (101), selon un mouvement pratiquement linéaire, une liaison réalisée au préalable entre l'appareil (103) et l'adaptateur (105) reste maintenue et en ce que par un mouvement de bascule, la liaison entre l'appareil (103) et l'adaptateur (105) est rompue.

16. Dispositif selon la revendication 5, caractérisé en ce que le dispositif de verrouillage comprend un premier et un second éléments de liaison, que le premier élément de liaison (106, 109, 110) s'évase dans la direction du second élément de liaison (107, 111), la partie allant en s'évasant du premier élément de liaison (106, 109, 110) étant entouré par le second élément de liaison (107, 111); et en ce que la partie allant en s'évasant du premier élément de liaison (106, 109, 110) et le second élément de liaison (107, 111) sont formés de telle sorte que la partie allant en s'évasant du premier élément de liaison (106, 109, 110) ne puisse faire saillie du second élément de liaison (107, 111) que par un mouvement de bascule.

17. Dispositif selon la revendication 5, caractérisé en ce que l'adaptateur (105) présente pour l'essentiel la forme d'un angle droit, une branche du côté inférieur de l'appareil (103) et l'autre branche étant adaptée à la partie inférieure d'un des côtés de l'appareil; en ce que sur le côté inférieur de l'appareil (103) est prévue une saillie d'actionnement (106) qui s'engage dans une cavité (107) de l'adaptateur (105) quand l'adaptateur (105) est connecté; et en ce que sur le côté de l'appareil (103) est prévue une cavité (108) qui est munie sur le côté faisant face au côté inférieur de l'appareil (103) d'au moins un bec d'encliquetage (109, 110) dans lequel un étrier de blocage (111), qui est placée sur l'autre branche de l'adaptateur (105) s'engage quand l'adaptateur est enclenché.

18. Dispositif selon la revendication 17, caractérisé en ce que sur la branche de l'adaptateur (105) est prévu un ressort de pression (115) qui est tendu par l'introduction de la saillie d'actionnement (106) dans la cavité (107).

19. Dispositif selon la revendication 18, caractérisé en ce qu'avec le ressort de pression (115) des verrous (122,123) sont en liaison de pression-action, qui lors de la relaxation du ressort de pression (115) s'engagent dans des trous (124, 125) support de l'appareil (101).

20. Dispositif selon la revendication 5, caractérisé en ce que le système de verrouillage entre l'adaptateur (136) et le socle chargeur (135) et formé par une broche conique rigide (145) s'engageant dans un perçage (138) de l'adaptateur (136) et des bras d'extension (143) de l'adaptateur (136), et en ce que les bras d'extension (143) s'engagent par l'arrière avec l'adaptateur lié au socle chargeur (135) par les bords (146) d'une cavité (147) du socle chargeur (135).

21. Dispositif selon la revendication 20, caractérisé en ce que les bras d'écartement (143) lors du coulissement de l'appareil (1) sur l'adaptateur (136) peuvent être actionnés de telle sorte que le système de verrouillage entre l'adaptateur (136) et le socle chargeur (135) est rompu.

22. Dispositif selon la revendication 5, caractérisé en ce que le système de verrouillage entre l'adaptateur (136) et l'appareil (1) est supporté par une broche (150) s'engageant dans un perçage (138) de l'adaptateur (136), qui est supporté de façon à pouvoir coulisser axialement dans l'appareil à l'encontre de l'action d'un ressort (149), en ce qu'il est formé par un intervalle (152) de l'adaptateur (136) qui s'accroche derrière une saillie (151), et des bords (144) de l'adaptateur (136) qui s'engagent dans des cavités (153) de l'appareil (1) quand l'adaptateur (136) est relié à l'appareil (1).

23. Dispositif selon la revendication 22, caractérisé en ce que l'adaptateur (136) est muni d'une surface inclinée (139) montant vers son perçage (138), par laquelle la broche (150) de l'apareil, montée élastiquement, lors d'un coulissement longitudinal dans le socle chargeur (135) glisse de façon telle que lors d'un coulissement de l'appareil (1) il pénètre dans une position finale dans le perçage (138), sous l'effet du ressort (149) et dans cette position finale, les bras d'ecartement (143) de l'adaptateur (136) sont mis en action.

24. Dispositif selon la revendication 5, caractérisé en ce que l'adaptateur (160) s'adapte pour l'essentiel dans une cavité (133) de l'appareil (1), en ce que qu'une broche (150) supportée axialement en faisant ressort (1) fait saillie depuis l'appareil (1) dans la cavité (133) et dépasse sur l'adaptateur (160) lié à l'appareil (1) dans un alésage (164) de l'adaptateur (160), et en ce que sur l'appareil (1) et sur l'adaptateur (160) sont prévues des saillies (151, 144) et d'autres cavités (152, 153), de telle sorte qu'on empêche un déplacement de l'adaptateur (160) hors de la cavité (153) dans le sens longitudinal de la broche (150).

25. Dispositif selon la revendication 24, caractérisé en ce que l'adaptateur (160) comporte une fente (142) s'étendant jusqu'au bout de l'adaptateur (160) dans le sens longitudinal en sortant de l'alésage (164), et en ce que deux rebords faisant saillie latéralement sont disposées à l'autre extrémité de l'adaptateur (160).

26. Dispositif selon l'une des revendication 24 ou 25, caractérisé en ce que dans le socle chargeur (154) est prévue une autre broche (159) qui pour l'essentiel fait saillie à peu près perpendiculairement à une surface d'appui (155) du socle chargeur (154) et peut se déplacer à l'encontre de la force d'un ressort (161) dans le sens longitudinal du socle chargeur, en ce que des crochets (157) dépassant en faisant ressort sur une paroi d'extrémité (156) du socle chargeur (154), de telle sorte qu'ils entourent partiellement l'adaptateur (160) quand celui-ci repose contre la paroi terminale (156).

27. Dispositif selon la revendication 26, caractérisé en ce que l'autre broche (159) présente un diamètre qui est plus petit que le diamètre du perçage (164); et en ce que l'extrémité de l'autre broche (159) est de forme sphérique correspondant au diamètre du perçage (164).

28. Dispositif selon la revendication 26, caractérisé en ce que le socle chargeur (154) est muni d'un perçage s'étendant dans le sens de la longueur, dans lequel sont placés un ressort hélicoïdal (161) et un corps de guidage et de support (162); et en ce que l'autre broche (159) est introduite dans le corps de guidage et de support (162), qui fait saillie vers l'intérieur à travers un trou oblong (163) sur la surface d'appui (155) du socle chargeur (154).

29. Dispositif selon la revendication 5, caractérisé en ce que le socle chargeur (154) comporte une surface d'appui oblique (155) pour l'appareil (1), le câble (12) sortant de l'extrémité inférieure de la surface d'appui (155), et en ce que à l'extrémité inférieure de la surface d'appui (155) et sous l'extrémité supérieure de la surface d'appui (155) est prévue chaque fois une cavité (165, 165') ouverte vers le bas.

Fig. 1

Fig. 2

31

44

45

37

Fig. 3

36

33

42

34

43

49

32

35

50

46

47

12

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

Fig. 29

Fig. 30

Fig. 33

Ansicht „Y"

Fig. 31

Fig. 32

Ansicht „X"

Fig. 34